(19) Europäisches Patentamt
European Patent Office
Office européen des brevets

(11) **EP 3 165 061 B1**

(12) **FASCICULE DE BREVET EUROPEEN**

(45) Date de publication et mention de la délivrance du brevet:
**20.02.2019 Bulletin 2019/08**

(51) Int Cl.:
*A01B 69/00* (2006.01)     *A01B 79/00* (2006.01)
*B62D 13/00* (2006.01)

(21) Numéro de dépôt: **16306435.5**

(22) Date de dépôt: **02.11.2016**

(54) **ATTELAGE AGRICOLE AVEC UN SYSTÈME DE GESTION ET DE GUIDAGE DE MANOEUVRES ET PROCÉDÉ MIS EN OEUVRE PAR CET ATTELAGE**

LANDWIRTSCHAFTLICHE ANHÄNGEVORRICHTUNG MIT EINEM SYSTEM ZUR STEUERUNG UND LENKUNG VON RANGIERMANÖVERN, UND VERFAHREN, DAS ANHAND DIESER ANHÄNGEVORRICHTUNG UMGESETZT WIRD

AGRICULTURAL COUPLING WITH A SYSTEM FOR MANAGING AND GUIDING MANOEUVRES AND METHOD IMPLEMENTED BY SAID COUPLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2015 FR 1560524**

(43) Date de publication de la demande:
**10.05.2017 Bulletin 2017/19**

(73) Titulaire: **Kuhn SA (Societe Anonyme)**
**67700 Saverne (FR)**

(72) Inventeurs:
• **POTIER, Philippe**
**67290 ZITTERSHEIM (FR)**
• **YATSKUL, Andrii**
**60000 Beauvais (FR)**
• **LEMIERE, Jean-Pierre**
**21000 DIJON (FR)**

(74) Mandataire: **Nuss, Laurent et al**
**Cabinet Nuss**
**10, rue Jacques Kablé**
**67080 Strasbourg Cedex (FR)**

(56) Documents cités:
**EP-A1- 1 088 743     EP-A1- 1 327 570**
**EP-A1- 1 772 350     US-A1- 2010 256 871**

EP 3 165 061 B1

## Description

La présente invention concerne le domaine du machinisme agricole et plus particulièrement celui de la conception, de la réalisation et de la mise en oeuvre d'équipements agricoles destinés à réaliser des manoeuvres et des opérations nécessaires à la culture des productions végétales.

L'invention a plus particulièrement pour objet un attelage agricole apte à réaliser de manière automatique ou semi-automatique des manoeuvres, ainsi qu'un procédé de gestion et de guidage automatisés ou semi-automatisés de telles manoeuvres.

Pour accomplir les divers travaux agricoles, il est usuel d'utiliser des machines agricoles animées et entraînées par des tracteurs. Ces tracteurs sont associés à des outils portés, ou à des machines semi-portées, ou encore à un certain nombre de machines tractées.

Un tel ensemble tracteur-machine(s) ou tracteur-outil(s) est désigné généralement et dans la présente par attelage agricole, ou encore attelage agricole motorisé ou mécanisé.

En particulier, il s'agit, dans le cadre de la présente invention, d'appliquer un système et un procédé de gestion et de guidage de manoeuvres répétitives au cas d'un ensemble tracteur-outils comportant préférentiellement jusqu'à quatre composantes opérationnelles attelées (y compris le tracteur). Les demi-tours en bout de champ constituent un exemple préféré, mais non limitatif, des manoeuvres concernées par la présente invention.

L'apparition de la mécanisation en agriculture depuis le début du 20$^{ème}$ siècle a entrainé l'utilisation d'attelages tracteur + machine(s) de plus en plus puissants, rapides et de plus grande taille. Ce phénomène a eu comme conséquence la nécessité d'en automatiser progressivement le fonctionnement, au moins de manière partielle, un contrôle uniquement humain devenant de plus en plus aléatoire. Le domaine du machinisme agricole a donc fait l'objet de nombreuses innovations technologiques relatives à son automatisation principalement grâce à l'utilisation de technologies électroniques, puis de systèmes informatisés embarqués.

Actuellement, au moyen du système connu par la société Millier Elektronik sous la désignation "Headland Management System", il est possible d'enregistrer et de reproduire des tâches répétitives (changement de vitesse, éteindre ou allumer la prise de force du tracteur, relever ou baisser l'attelage, ...) en arrivant au bout du champ. En revanche, la manoeuvre de demi-tour est généralement toujours réalisée par un chauffeur. Le chauffeur suit une trajectoire approximative en tenant compte de la largeur et du rayon de braquage de la machine agricole (ou de l'ensemble de l'attelage). Au fur et à mesure de l'utilisation répétée d'une même combinaison entre un tracteur et une machine attelée (ou semi-portée), l'opérateur maitrisera mieux la manoeuvre et optimisera empiriquement la trajectoire suivie et la rapidité de la manoeuvre. Or, les temps de manoeuvres (notamment en bout de champ) augmentent la durée d'un chantier puisque la machine n'est pas productive durant les demi-tours.

Les brevets US 8131432B2 et US 8346443B2 proposent une méthode et un système pour gérer le demi-tour d'un véhicule en posant des limites à la surface de travail. Le tracteur se dirige lui-même lors des demi-tours et contrôle ainsi la machine attelée.

Les prérequis obligatoires aux solutions divulguées dans ces brevets sont :

- donner les limites de la parcelle travaillée,
- indiquer les obstacles potentiels,
- définir les dimensions et paramètres du tracteur (normalement déjà présents dans le module de commande du tracteur),
- définir les dimensions et paramètres de chaque machine attelée,
- géolocaliser précisément les machines agricoles par un système de type GPS.

L'enseignement de ces deux documents correspond au système de commande de direction connu sous la désignation "iTEC Pro" ("Intelligent Total Equipment Control" - "Contrôle intelligent total de l'équipement") de la société John DEERE. Ce système est automatisé, mais il reste nécessaire d'indiquer le sens dans lequel doit tourner le tracteur (à droite ou à gauche).

Il est aussi connu d'utiliser une gestion automatique des demi-tours sur des moissonneuses-batteuses. Sur un tel véhicule automoteur, les organes de travail utilisés (comme la barre de coupe par exemple) sont directement montés sur le véhicule automoteur et aisément contrôlables en position. Les systèmes actuels de ce type (par exemple celui connu sous la désignation "GPS PILOT FLEX") nécessitent l'emploi de systèmes de géolocalisation pour fonctionner.

Par conséquent, en accord avec l'état de la technique actuel, le demi-tour en bout de champ peut être réalisé selon les types de procédés suivants :

1. Guidage manuel (méthode la plus répandue). Le chauffeur estime "à l'oeil" l'espace utilisable et essaie "d'inscrire" la trajectoire de l'ensemble tracteur-outils dans cet espace.

2. Autoguidage par apprentissage. Ce système de guidage enregistre une trajectoire type réalisée par l'opérateur et répète cette trajectoire.

3. Demi-tour automatisé, assisté par un dispositif de géolocalisation de type GPS (l'utilisateur est obligé d'entrer la géométrie de l'ensemble tracteur-outils et le sens du braquage).

Ainsi, il résulte de ce qui précède que le guidage automatisé des outils agricoles lors des demi-tours est un procédé connu, mais uniquement dans certaines configurations, comme présenté par exemple dans : US 8346443B2, US 8577558B2, EP 2659759A1, US 2013/0289883A1, US 2012/0185139A1, US 2005/0015189A1.

Dans toutes ces solutions connues, le guidage automatique des manoeuvres est piloté par le tracteur (qui intègre au besoin un organe électronique complémentaire qui lui est intégré) et il utilise obligatoirement un système de géolocalisation externe.

Autant la conduite manuelle que les solutions automatisées connues présentent des inconvénients et des limitations dans leur mise en oeuvre pratique qu'il y a lieu de surmonter.

Ainsi, la conduite manuelle des ensembles avec des outils tractés constitue une tâche difficile et complexe, exigeant que le chauffeur soit en permanence attentif et vigilant. L'accroissement de la largeur de travail (par exemple pour les cultivateurs, les semoirs ou les pulvériseurs) et l'augmentation du nombre des éléments remorqués, l'augmentation de la vitesse de travail au champ, font que la conduite de tels équipements devient encore plus compliquée et potentiellement accidentogène. Le point le plus délicat concerne surtout des manoeuvres en bout de champs, telles que les demi-tours. Les chauffeurs ou opérateurs sont, par exemple, obligés de réduire la vitesse d'avancement et de contrebraquer pour compenser la faible manoeuvrabilité des grandes machines, tout en inscrivant l'ensemble mobile dans une zone de manoeuvre réduite en bout de champ (fourrière). Des constatations réalisées sur le terrain montrent que près de 20 % du temps travail peut être perdu lors des manoeuvres en bout de champ. De plus, le sol de la zone de fourrière est plus compacté en raison des manoeuvres qui y sont faites, ce qui y réduit le rendement de la récolte. La largeur des fourrières donc doit être réduite au minimum ce qui complique la stratégie d'établissement des trajectoires de manoeuvre. Il est difficile à un opérateur humain de prendre en compte tous ces paramètres pour déterminer une trajectoire au moment où il effectue la manoeuvre.

Les solutions automatisées connues, reposant sur une intelligence embarquée au niveau du tracteur, ont également leurs points négatifs.

Ainsi, lorsque c'est le tracteur qui gère le demi-tour d'un ensemble attelé tracteur-outils, l'utilisateur doit indiquer un nombre important de données relatives aux éléments attelés (ou semi portés) pour que le tracteur soit capable d'effectuer le demi-tour en mode automatique. En effet, c'est le matériel attelé (ou semi-porté) qui comporte le plus de variantes de construction et de paramètres de réglages pour réaliser les opérations techniques voulues. Une opération de saisie de données doit donc être réalisée à chaque changement de machine et pour chaque nouvelle machine, ce qui est fastidieux, source d'erreurs et coûteux en temps.

Dans le cas d'une prise de contrôle par le tracteur, les systèmes actuels nécessitent une géolocalisation du tracteur et en général aussi des éléments tractés. Un tel équipement est coûteux et peut présenter des dérives dans le cas notamment de grandes parcelles (dues à la sphéricité imparfaite de la terre). De plus, le mode d'obtention des trajectoires dans le cas des solutions connues n'est pas optimisé : la trajectoire établie est d'abord celle du tracteur alors que l'élément important pour l'opération agricole à réaliser est le positionnement et la trajectoire des outils travaillant tractés ou semi-portés, qui de plus sont en général les éléments les plus larges (et donc les moins manoeuvrables).

Enfin, dans ces systèmes automatiques connus, c'est la trajectoire du tracteur qui est contrôlée, ainsi que l'absence de contact entre le tracteur et la première machine attelée, par le contrôle de la distance entre eux. Ainsi, dans le cas de demi-tours, le positionnement des machines ou des outils à la sortie et à l'entrée de la zone de travail, qui constituent les paramètres les plus importants, n'est pas géré et a fortiori pas garanti.

L'invention vise notamment à surmonter au moins les inconvénients majeurs évoqués précédemment.

Compte tenu des limitations des systèmes existants exposés ci-dessus, les principaux buts de l'invention sont les suivants :

- proposer un système de gestion et de guidage semi-automatique ou automatique des manoeuvres (dont les demi-tours en bout de champ) d'un ensemble tracteur-machines attelées afin que ces manoeuvres soient réalisées de façon efficace, rapide, sûr et fiable,
- rendre les chantiers plus performants en termes de rapidité, de coût énergétique ou de protection des sols (en particulier dans les fourrières).

Ainsi, la présente invention a pour objectif de fournir un système apte à gérer de manière entièrement automatique ou de manière semi-automatique des manoeuvres, en particulier des demi-tours, qui est indépendant du tracteur, utilisable avec des tracteurs présentant ou non une intelligence embarquée et apte à gérer des manoeuvres de demi-tour, avec prédiction des trajectoires pour des attelages agricoles motorisés comportant indifféremment une, deux ou trois composante(s) opérationnelle(s) attelée(s) à un tracteur.

A cet effet, l'invention a pour objet un attelage **présentant l'ensemble des caractéristiques de la revendication 1.**

L'invention concerne également un procédé de gestion automatisée ou semi-automatisée de manoeuvres, notamment de demi-tours, d'un attelage **présentant l'ensemble des caractéristiques de la revendication 9.**

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

Les figures 1A et 1B sont des représentations schématiques de dessus d'un attelage selon l'invention comprenant respectivement trois éléments (tracteur + deux composantes opérationnelles) et quatre éléments (tracteur + trois composantes opérationnelles) et équipé d'un système de gestion et de guidage de manoeuvres ;

La figure 2 est un schéma blocs global illustrant le cheminement et le traitement de l'information et des instructions dans le système de gestion et de guidage des manoeuvres selon l'invention en fonction du mode de pilotage (modalité 1 : pilotage semi-automatique, modalité 2 : pilotage automatique) ;

La figure 3 est un schéma blocs détaillé illustrant les principaux éléments fonctionnels faisant partie du système de gestion et de guidage de manoeuvres selon l'invention et leurs échanges mutuels ;

La figure 4 est un schéma blocs fonctionnel illustrant les interactions possibles entre les algorithmes mis en oeuvre par l'unité maître et les interfaces de communication dans le cadre du système de gestion et de guidage de manoeuvres ;

La figure 5 est un ordinogramme (Grafcet) illustrant les principales étapes du procédé selon l'invention et correspond à un mode dit "de marche normale" du système, et,

La figure 6 est un chronogramme de l'exécution d'une manoeuvre avec correction de trajectoire, avec mise en oeuvre du procédé et du système selon l'invention.

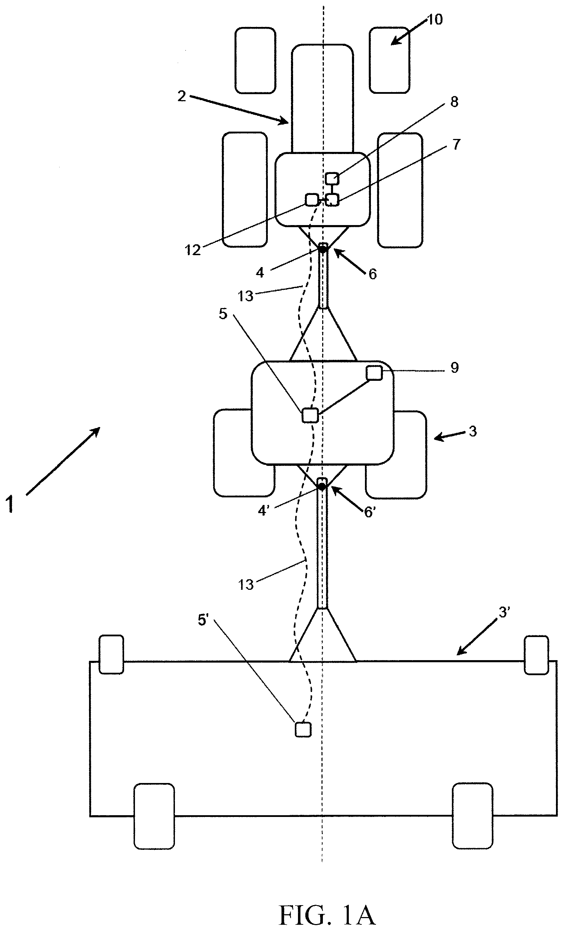

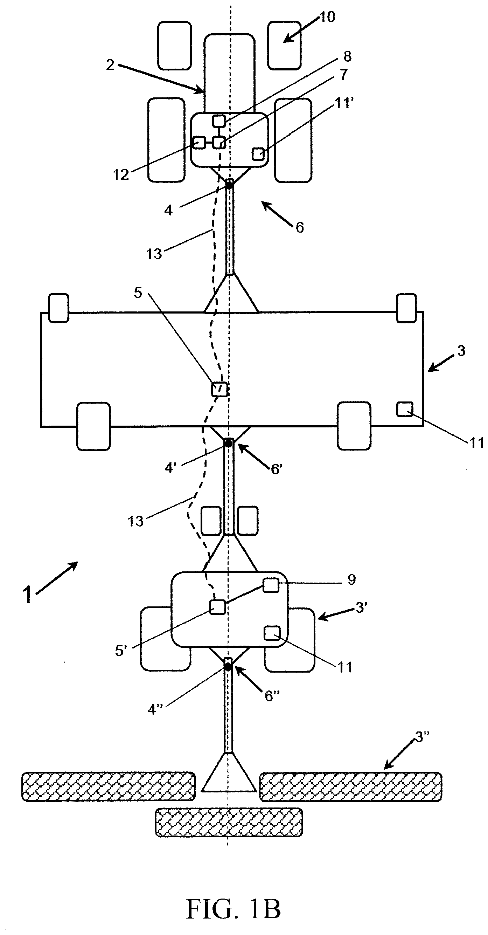

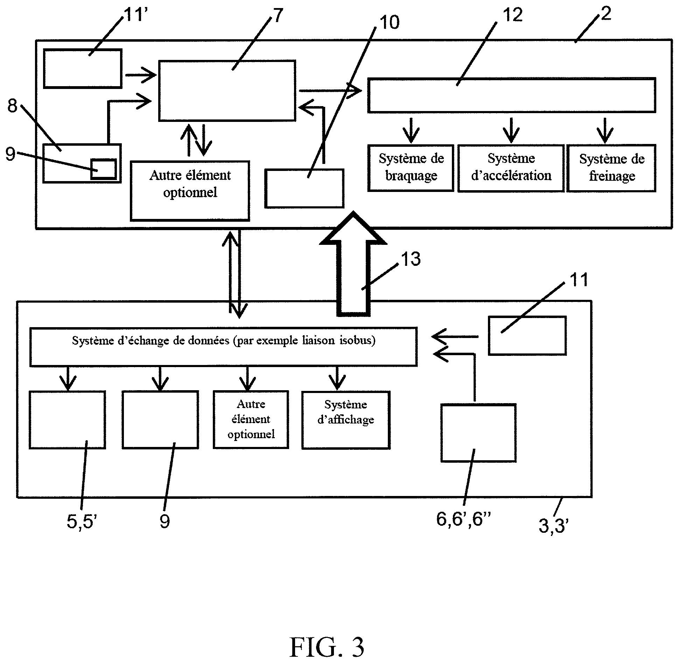

Les figures 1A et 1B montrent, en relation avec la figure 3 notamment, un attelage 1 comprenant, en tant que composantes opérationnelles constitutives, un tracteur 2 et au moins une machine agricole 3, 3', 3" tractée ou semi-portée, attelée directement audit tracteur ou à une machine précédente 3, 3' dans l'attelage par au moins une liaison articulée 4, 4', 4". Cet attelage 1 comprend également un système de gestion et de guidage de manoeuvres, notamment de demi-tours, comportant au moins une unité 5, 5' de calcul et de commande, qui est intégrée à la ou à l'une des machine(s) attelé(e) 3, 3', 3" et qui est reliée, d'une part, à au moins un capteur 6, 6', 6" l'informant sur les positions relatives mutuelles courantes des deux composantes 2, 3 ; 3, 3' ; 3', 3" de chaque paire de composantes opérationnelles 3, 3', 3" de l'attelage 1 reliées entre elles par une liaison articulée 4, 4', 4", d'autre part, à une unité de gestion et de commande 7 du tracteur 2 et/ou à une interface 8 de communication, notamment d'affichage et éventuellement de commande, avec le conducteur et, enfin, à au moins un moyen 9 de paramétrage ou de programmation, ces composantes fonctionnelles additionnelles 6, 6', 6", 7, 8, 9 (comprenant ledit au moins un capteur 6, 6', 6", l'unité 7 et/ou l'interface 8 et ledit au moins un moyen 9 de paramétrage ou de programmation) auxquelles l'unité 5, 5' de calcul et de commande précitée est reliée, faisant également partie du système de gestion et de guidage de manoeuvres.

L'interface de communication 8, par exemple sous la forme d'un écran tactile ou analogue, est préférentiellement disposé, éventuellement de manière déplaçable et ou amovible, dans la cabine tracteur 2. Un moyen 9 de paramétrage et/ou de programmation est monté sur la machine 3 comportant l'unité maître 5 de l'attelage 1, ou peut être relié temporairement à cette dernière. Ce moyen 9 de paramétrage et/ou de programmation peut de manière alternative être également présent dans la cabine du tracteur 2, et éventuellement intégré au moyen 8. Ce moyen 9 de paramétrage et/ou de programmation, ainsi que l'interface de communication 8, peuvent être également dupliqués sur différents éléments de l'attelage.

Bien entendu, les liaisons entre les moyens 8 et 9 et le tracteur 2 et la machine 3 respectivement peuvent être de nature filaire ou sans fil.

Conformément à l'invention, l'unité 5, 5' de calcul et de commande de la 3 ou d'une des machine(s) agricole(s) 3', 3" attelée(s) constitue l'unité maître du système de gestion et de guidage de manoeuvres et préférentiellement de l'ensemble de l'attelage 1.

Elle est apte et destinée, sous le contrôle d'un programme adapté de gestion des manoeuvres :

d'une part, à calculer une trajectoire de consigne pour au moins une manoeuvre à venir, déclenchée automatiquement ou par le conducteur, ce sur la base de paramètres préprogrammés relatifs aux caractéristiques et grandeurs physiques du tracteur 2 et de la ou des machine(s) 3, 3', 3" attelée(s), à des objectifs et/ou des contraintes lié(e)s au travail agricole à réaliser et au terrain à traiter et à des choix de fonctionnement de l'attelage 1 et en mettant en oeuvre un algorithme de prédiction de trajectoires et un algorithme d'optimisation de consignes de trajectoires et, d'autre part, à exécuter automatiquement ladite manoeuvre ou à assister une exécution semi-automatique de ladite manoeuvre, ce éventuellement de manière répétée, en pilotant le tracteur 2, directement ou par l'intermédiaire de l'unité 7 de gestion et de commande de ce dernier, et en relevant, en cours de manoeuvre, les écarts entre la trajectoire de consigne prédéfinie et la trajectoire réelle ou couramment estimée, pour les corriger automatiquement ou pour les signaler au conducteur en mode semi-automatique, éventuellement après calcul des manoeuvres de corrections de trajectoire à réaliser par l'intermédiaire d'un algorithme adapté.

Ainsi, l'invention fournit un attelage 1 apte notamment à gérer automatiquement ou semi-automatiquement les manoeuvres de la ou des machine(s) agricole(s) 3, 3', 3" qu'il intègre, ce indépendamment du tracteur 2 faisant également partie de l'attelage.

Ce but est atteint, comme indiqué précédemment, par le fait que l'unité de calcul et de commande 5, 5' de la ou d'une des machine(s) attelée(s) 3, 3', 3" constitue l'unité maître de l'attelage 1 et que le système de gestion et de guidage des manoeuvres de l'attelage 1 intègre un programme mis en oeuvre par l'unité 5, 5' pour réaliser les fonctions/opérations précitées.

Par conséquent, l'invention autorise notamment, d'une part, une utilisation des machines agricoles avec différents tracteurs et, d'autre part, la possibilité d'optimiser les trajectoires quel que soit le nombre de machines dans l'attelage.

En outre, les avantages particuliers suivants de l'invention ont pu être mis en évidence :

- augmentation de l'efficacité de la ou des machine(s) via la réduction de la durée d'une manoeuvre,
- soulagement du travail de l'opérateur et réduction de sa fatigue lors la répétition de taches monotones exigeant beaucoup de prudence et de concentration lorsqu'elles sont réalisées manuellement,
- possibilité d'effectuer les manoeuvres à une vitesse élevée,
- réduction de l'endommagement du sol et de sa compaction lors de manoeuvres répétitives (par exemple demi-tours répétés au niveau des fourrières) notamment en réduisant les longueurs parcourues ou en respectant des angles de braquage ou de pliage entre éléments attelés qui favorisent un bon roulement des machines,
- assurance de l'exactitude d'une manoeuvre indépendamment des conditions externes (nuit, brouillard, etc).

Plus spécifiquement, par rapport à des manoeuvres gérées ou pilotées par le tracteur 2, l'invention présente des avantages majeurs pour les raisons suivantes :

- La plupart des tractoristes ne possèdent et n'inplémentent pas de système de demi-tour automatisé (manoeuvre délicate).
- Les organes de travail (ainsi que les systèmes de contrôle associés) sont sur les composantes opérationnelles tractées (ou semi-portées). Les constructeurs de ces matériels (portant les organes de travail actifs au cours des opérations agricoles concernées) sont donc mieux à même de définir les conditions optimales de fonctionnement de l'opération agricole concernée et, par conséquent, de définir le paramétrage optimale des manoeuvres associées à l'emploi de leurs équipements.
- La machine 3, 3', 3" attelée ou semi-portée contrôlera avec une plus grande précision et avec une rapidité plus élevée ses propres mécanismes, le démarrage ou l'arrêt de ses systèmes.
- Le matériel attelé (ou semi-porté) comporte beaucoup de variantes de construction et de paramètres de réglages pour réaliser les différentes opérations techniques voulues. Une opération de saisie de données doit être réalisé pour chaque machine (ce qui est coûteux en temps) si c'est le système électronique du tracteur qui pilote les manoeuvres. Les données relatives au tracteur sont beaucoup moins nombreuses et moins variées que celles des machines attelées, la saisie des données correspondantes est donc moins coûteuse en temps et plus simple lorsque l'unité 5, 5' de l'une des machines tractées ou semi-portées pilote les manoeuvres.

Avantageusement, le système de gestion et de guidage des manoeuvres, et donc l'attelage 1, peut intégrer également au moins un capteur additionnel 10 au niveau du tracteur 2 apte et destiné à fournir des informations sur l'angle de braquage des roues directionnelles 2', la vitesse de rotation des roues motrices 2", la vitesse absolue d'avancement, la position en hauteur de son attelage à trois points et/ou la vitesse d'entrainement de sa prise de force.

Bien que l'attelage 1 puisse être constitué par un ensemble élémentaire comprenant le tracteur et une unique machine 3 attelée (non représenté), les effets bénéfiques de l'invention sont particulièrement perceptibles lorsque l'attelage comprend, comme le montrent les figures 1A et 1B, au moins deux machines agricoles 3, 3' attelées en série l'une derrière l'autre au tracteur 2, la première machine 3 de la série étant reliée directement au tracteur 2 en étant tractée, portée ou semi-portée, la seconde machine 3', ainsi que les éventuelles machines suivantes 3", étant reliées de manière articulée à la machine 3, 3' qui les précède respectivement.

De plus, au moins un capteur 6, 6', 6" fournissant un signal indicatif de la position relative mutuelle de deux composantes opérationnelles 2, 3, 3', 3" reliées entre elles par une liaison articulée 4, 4', 4" est associé à ou monté au niveau de la ou chaque liaison articulée 4, 4', 4".

Préférentiellement, la ou chaque liaison articulée 4, 4', 4" présente au moins un degré de liberté sous forme de faculté de pivotement autour d'un axe de rotation vertical et/ou perpendiculaire au sol et en ce que le, certains ou chaque capteur(s) 6, 6', 6" associé(s) à la ou aux liaison(s) articulée(s) 4, 4', 4" fourni(ssen)t un signal indicatif de la configuration de la ou des liaison(s) articulée(s) 4, 4', 4" correspondante(s) autour de l'axe de rotation concerné.

C'est en effet l'orientation et la modification de l'orientation dans le plan horizontal ou plan du sol des différentes machines attelées 3, 3', 3" qui détermine le tracé de l'attelage 1 et donc le traitement du sol et/ou des végétaux rencontré(s) durant le trajet parcouru, par exemple au niveau des fourrières dans le cadre de manoeuvres de demi-tours.

Lorsque l'attelage 1 comprend, en tant que composantes fonctionnelles, deux machines (3 et 3' - figure 1A) ou trois machines (3, 3" et 3" - figure 1B), plusieurs situations peuvent se présenter :

- soit une seule desdites machines (préférentiellement la première de l'attelage 1, reliée directement au tracteur 2) comporte une unité de calcul et de commande 5, qui fait alors d'office fonction d'unité maître du système de gestion et de guidage des manoeuvres,
- soit plusieurs desdites machines comprennent des unités de calcul et de commande 5, 5' et, dans ce cas, l'unité 5 de la première machine 3 de l'attelage endosse préférentiellement le rôle d'unité maître (la ou les autres unités 5' pouvant remplir leur fonction habituelle au niveau de la machine 3' qu'elle(s) équipe(nt) et bien entendu dialoguer avec l'unité maître 5).

Pour pouvoir réaliser un repérage géographique de l'attelage 1 ou au moins de certaines de ses composantes constitutives dans le champ à traiter et donc permettre une gestion entièrement automatisée des manoeuvres, il peut être avantageusement prévu que le tracteur 2 et/ou la ou au moins l'une des machines agricole(s) tractée(s) 3, 3', 3" soi(en)t équipé(e)(s) d'une antenne de géolocalisation 11, 11' dont les données sont transmises à l'unité maître de calcul et de commande 5 et traitées par cette dernière, en mode de fonctionnement automatique, et/ou visualisées sur l'interface de communication 8.

Préférentiellement, l'unité maître 5 de calcul et de commande, ainsi que le cas échéant l'antenne de géolocalisation 11, est(sont) montée(s) sur la première machine agricole 3 directement reliée au tracteur 2, lorsqu'elle est tractée ou semi-portée.

Comme le montrent les figures 1 et 3 des dessins annexés et pour autoriser une gestion automatique des manoeuvres, l'unité maître 5 est reliée à une interface de commande de puissance 12 du tracteur 2, ou à l'unité de gestion et de commande 7 de ce dernier, par un bus de communication 13, ce bus 13 assurant également la transmission de données entre cette unité maître 5 et les autres composantes fonctionnelles 8, 10, 11' du système de gestion et de guidage, équipant éventuellement le tracteur 2.

A titre d'exemple pratique de réalisation, le bus de communication 13 peut être du type connu sous la désignation ISOBUS (marque déposée) et le pilotage du tracteur 2, équipé de l'unité 7 (TECU - Unité de contrôle électronique du tracteur), peut reposer sur la technologie de guidage connue sous la désignation TIM (Tractor Implement Management - Gestion du tracteur par l'outil).

On peut noter que les éléments fonctionnels constitutifs du système de gestion et de guidage/pilotage des manoeuvres sont, à l'exception éventuelle des capteurs 6, 6', 6", constitués par des éléments déjà présents sur le tracteur 2 ou les machines 3, 3', 3" formant l'attelage 1, les possibilités et performances dudit système étant conditionnées par leur niveau d'équipement (présence ou non d'une unité 7 au niveau du tracteur 2 ; présence ou non d'antennes 11, 11' de géolocalisation ; nombre et nature des capteurs présents sur les machines et le tracteur).

En accord avec une caractéristique additionnelle de l'invention, l'interface 8 comporte, en outre, un moyen de sélection du mode de fonctionnement entre un fonctionnement à commande entièrement automatique, à commande semi-automatique ou à commande manuelle.

L'invention concerne également un procédé de gestion automatisée ou semi-automatisée de manoeuvres, notamment de demi-tours, d'un attelage 1 articulé ou poly-articulé comprenant un tracteur 2 et au moins une machine agricole 3, 3', 3" tractée ou semi-portée attelée directement audit tracteur, ou à une machine précédente dans l'attelage, par au moins une liaison articulée 4, 4', 4", ainsi qu'un système de gestion et de guidage de manoeuvres, notamment de demi-tours. Ce système comporte une unité de calcul et de commande 5, 5', qui est intégrée à la ou à l'une des machine(s) attelée(s) 3, 3', 3", et qui est reliée, d'une part, à au moins un capteur 6, 6', 6" l'informant sur les positions relatives mutuelles courantes des deux composantes de chaque paire de composantes opérationnelles 2, 3, 3', 3" de l'attelage 1 reliées entre elles par une liaison articulée, d'autre part, à une unité 7 de gestion et de commande du tracteur 2 et/ou à une interface 8 de communication, notamment d'affichage et éventuellement de commande, avec le conducteur et, enfin, à au moins un moyen 9 de paramétrage ou de programmation, ces composantes fonctionnelles additionnelles faisant également partie du système de gestion et de guidage de manoeuvres.

Conformément à l'invention, ledit procédé consiste, par l'intermédiaire de l'unité de calcul et de commande 5 de la machine agricole 3 considérée, agissant en tant qu'unité maître du système de gestion et de guidage des manoeuvres de l'attelage 1, et par exécution d'un programme adapté de gestion des manoeuvres, à calculer une trajectoire de consigne pour au moins une manoeuvre à venir, déclenchée automatiquement ou par le conducteur, ce sur la base de paramètres préprogrammés relatifs aux caractéristiques constructives, fonctionnelles et dimensionnelles pertinentes du tracteur 2 et de la ou des machine(s) 3, 3', 3" attelée(s), à des objectifs et/ou des contraintes lié(e)s au travail agricole à réaliser et au terrain à traiter et à des choix de fonctionnement de l'attelage 1 et en mettant en oeuvre un algorithme de prédiction de trajectoires et un algorithme d'optimisation de consignes de trajectoires,

puis à exécuter automatiquement ladite manoeuvre ou à assister une exécution semi-automatique de ladite manoeuvre, ce éventuellement de manière répétée, en pilotant le tracteur 2, directement ou par l'intermédiaire de son unité 7 de gestion et de commande, et en relevant, en cours de manoeuvre, les écarts entre la trajectoire de consigne prédéfinie et la trajectoire réelle ou couramment estimée, pour les corriger automatiquement ou pour les signaler au conducteur en mode semi-automatique, éventuellement après calcul des mesures de correction de trajectoire à réaliser par mise en oeuvre d'un algorithme adapté.

Bien entendu, l'attelage 1 et ses éléments constitutifs correspondent avantageusement à ceux décrits précédemment.

En accord avec une première variante d'exécution possible du procédé, ce dernier consiste, en mode de gestion semi-automatique d'une manoeuvre, à afficher, à l'intention de l'opérateur installé dans le tracteur 2 et préférentiellement par l'intermédiaire d'un dispositif d'affichage faisant partie de l'interface de communication 8, une trajectoire de consigne préconisée, éventuellement ajustée ou rafraîchie en cours de manoeuvre en fonction de l'évolution de la position du tracteur 8, d'une machine agricole 3, 3', 3" et/ou de l'attelage 1, et à autoriser l'opérateur à effectuer la manoeuvre dans la limite de conditions circonstancielles et de sécurité, ainsi que des possibilités physiques, cinématiques et mécaniques de l'attelage 1, l'unité 5 de calcul et de commande de la machine agricole 3 considérée fournissant une aide à la décision sous forme de trajectoire préconisée et éventuellement d'indications plus ou moins détaillées pour la réalisation d'actions pour le pilotage de la manoeuvre et/ou la correction de trajectoire.

En accord avec un second mode d'exécution possible de l'invention, le procédé consiste, en mode de gestion automatique d'une manoeuvre par l'unité maître 5, à prendre en compte des données fournies par au moins une antenne 11, 11' de géolocalisation équipant le tracteur 2 ou l'une au moins des machines attelées 3, 3', 3".

Dans le cadre d'une phase préparatoire, le procédé peut consister, préalablement au traitement d'un chantier, préférentiellement immédiatement après constitution d'un attelage 1 en vue d'un travail simple ou complexe, à paramétrer l'algorithme de calcul des trajectoires en indiquant à l'unité maître 5 différentes caractéristiques fonctionnelles, structurelles et dimensionnelles du tracteur 2 et de la ou des autres machine(s) agricole(s) 3', 3" de l'attelage 1 considéré.

En relation avec les caractéristiques cinématiques de l'attelage agricole motorisé 1 et des liaisons entre ses différents éléments 2, 3, 3', 3", il est avantageusement prévu de prendre en compte, au niveau de la ou de chaque liaison articulée 4, 4', 4", au moins un degré de liberté sous forme de faculté de pivotement autour d'un axe de rotation vertical et/ou perpendiculaire au sol, le, certains ou chaque capteur(s) 6, 6', 6" associé(s) à la ou aux liaison(s) articulée(s) 4, 4', 4" fournissant un signal indicatif de la configuration de la ou des liaison(s) articulée(s) 4, 4', 4" correspondante(s) autour de l'axe de rotation respectivement concerné.

Préférentiellement, les caractéristiques et grandeurs suivantes sont renseignées lors de la phase de paramétrage de l'algorithme de calcul des trajectoires :

- l'angle de braquage maximal du tracteur 2,
- les largeurs maximales des composantes 2, 3, 3', 3" de l'attelage 1,
- la vitesse d'avancement souhaitée lors de la manoeuvre,
- la vitesse angulaire maximale de braquage des roues directrices du tracteur 2,
- les angles de pliage ou de pivotement maximum entre les composantes de l'attelage 2, 3, 3', 3",
- la distance entre le pont arrière d'une composante de l'attelage 1 et le point d'attelage de la composante suivante qui lui est reliée,
- la distance entre le pont arrière d'une composante attelée et son point d'attelage à la composante précédente,
- les empattements des composantes de l'ensemble cinématique formé par l'attelage 1,
- le sens de braquage (droite ou gauche).

De manière similaire, il peut être prévu de paramétrer l'algorithme d'optimisation de trajectoire en renseignant des objectifs d'optimisation souhaités, tels que, par exemple, la minimalisation du temps de travail, la minimalisation de la distance parcourue par l'une des composantes 2, 3, 3', 3" de l'attelage 1 durant la manoeuvre et/ou la minimalisation d'au moins une dimension géométrique caractérisant l'espace de manoeuvre, telle que par exemple la largeur de la fourrière ou la distance parcourue par le tracteur dans le cas d'un demi-tour.

Conformément à une application particulièrement préférée du procédé selon l'invention, ce dernier peut consister à paramétrer l'algorithme d'optimisation de trajectoire, dans le cas de la gestion des demi-tours, par l'indication de contraintes d'exécution telles que, par exemple, l'imposition d'un point d'entrée et/ou d'un point de sortie dans la zone de travail du sol ou de la culture, ou encore l'imposition d'une largeur maximale autorisée de fourrière correspondant à un multiple déterminé, par exemple 2 ou 3, de la largeur de travail de la machine agricole 3, 3', 3" la plus large de l'attelage 1.

Selon un premier mode opératoire, le procédé peut consister à prendre en compte, lors de l'exécution sous contrôle de la manoeuvre selon une trajectoire de consigne calculée et optimisée, les données fournies par différents capteurs 6, 6', 10 montés sur le tracteur 2 et/ou la ou les machines agricoles 3, 3', 3" et/ou associés à la ou aux différentes liaison(s) articulée(s) 4, 4', 4" entre les composantes 2, 3, 3', 3" de l'attelage 1.

Selon un second mode opératoire, alternatif ou éventuellement complémentaire du premier mode précité, le procédé peut consister à prendre en compte, lors de l'exécution sous contrôle de la manoeuvre en accord avec une trajectoire de consigne calculée et optimisée, les données fournies par un système de géolocalisation dont au moins une antenne 11, 11' correspondante est montée sur la machine agricole 3 comportant l'unité maître 5, sur une autre machine agricole 3', 3" de l'attelage 1 ou sur le tracteur 2, et éventuellement à relever les écarts avec la trajectoire de consigne préconisée et à les afficher, voire le cas échéant à calculer et à indiquer à l'opérateur les mesures compensatoires et/ou à les corriger automatiquement.

Lorsque le tracteur 2 est équipé d'une unité 7, l'unité maître 5 adresses ses instructions à cette unité pour l'exécution de la manoeuvre.

Lorsque le tracteur 2 ne comporte pas d'unité 7, ou lorsque cette dernière ne peut ou ne doit pas être sollicitée pour l'exécution d'une manoeuvre, il peut être prévu de réaliser la manoeuvre considérée sous le contrôle de l'unité maître 5 par transmission d'instructions de cette dernière vers une interface de commande de puissance 12 du tracteur 2, pilotant notamment les systèmes de braquage, d'accélération et de freinage dudit tracteur 2.

Ainsi, grâce à l'invention, il est possible de :

- prédire les trajectoires optimisées en temps de trajet, en distance parcourue ou selon un autre critère géométrique, des composantes d'un ensemble tracteur-machines (comportant des machines agricoles traînées ou semi-portées) au cours des opérations de demi-tour ou au cours d'autres manoeuvres répétées,
- piloter le tracteur d'une façon semi-automatisée ou automatisée afin de suivre la trajectoire optimisée prédéfinie avec ou sans utilisation d'un système GPS ou analogue.

A titre d'illustration de l'invention, un exemple pratique de réalisation est décrit ci-après à titre non limitatif, en relation avec les figures annexées.

Il est rappelé que les points techniques essentiels qui en combinaison forment le mode de réalisation préférentiel de l'invention sont les points 1 à 4 suivants :

1. L'utilisation d'un modèle mathématique de calcul et de simulation des trajectoires (désigné aussi par le terme d'algorithme de prédiction de trajectoires adapté aux opérations agricoles) qui se paramètre avantageusement avec :

- Des grandeurs physiques liées au tracteur et aux machines agricoles qui lui sont associées (par exemple jusqu'à trois machines attelées l'une derrière l'autre et tirées par le tracteur).
- Des contraintes de fonctionnement liées à l'opération agricole concernée.

2. L'utilisation d'un modèle mathématique d'optimisation des trajectoires (désigné aussi par le terme d'algorithme d'optimisation ou algorithme de calcul de consigne de trajectoires) qui se paramètre avantageusement avec :

- Des grandeurs physiques liées au tracteur et aux machines agricoles qui lui sont associées (par exemple jusqu'à trois machines attelées l'une derrière l'autre et tirées par le tracteur).
- Des contraintes d'objectif(s) liées à l'opération agricole concernée. Sans autre spécification de la part de l'opérateur, un mode d'optimisation standard peut être appliqué en fonction de la manoeuvre réalisée. Parmi les contraintes d'objectifs possibles, on trouve le choix de la composante opérationnelle de l'ensemble tracteur-machines dont la trajectoire doit être prioritairement optimisée.
- Des choix de fonctionnement posés par l'opérateur. Sans autre spécification de la part de l'opérateur, un mode de fonctionnement standard peut être appliqué en fonction de la manoeuvre réalisée.

Chaque trajectoire calculée qui doit être respectée lors de la manoeuvre est appelée trajectoire consigne.

L'algorithme d'optimisation peut, par exemple, de façon simple ou combinée :

- Minimiser le temps passé lors de la manoeuvre.
- Minimiser la distance parcourue par une des composantes de l'ensemble tracteur-machines lors de la manoeuvre.
- Minimiser une des dimensions géométriques caractérisant l'espace de manoeuvre (comme la largeur de la fourrière).

Cette optimisation peut se faire sous contrainte :

- par exemple, en respectant un point d'entrée et/ou de sortie dans la zone de travail du sol ou de la culture, et/ou
- en inscrivant la manoeuvre dans une fourrière dont la largeur est un multiple de la largeur de travail de la machine la plus large de l'ensemble attelé.

3. Le contrôle semi-automatisé ou automatisé de la trajectoire des machines concernées lors de manoeuvres répétées (comme les demi-tours) et de compenser automatiquement (grâce à un algorithme de commande et son système électromécanique associé) ou par une supervision humaine les écarts observés ou estimés entre les trajectoires consignes établies et les trajectoires réelles des machines.

Dans le cas d'un mode de fonctionnement semi-automatisé avec une supervision humaine, plusieurs niveaux technologiques sont utilisables. Au niveau le plus simple, un élément informera l'opérateur sur les trajectoires consignes à respecter (ou sur une ou des grandeurs directement associées comme des valeurs d'angles de pliage ou de pivotement aux articulations entre deux éléments attelés, ou encore des valeurs d'angle de braquage de roues directrices). Ceci correspond à un fonctionnement de type "Monitoring" (surveillance) et l'opérateur réalise les opérations nécessaires. A un niveau supérieur d'assistance, l'opérateur peut aussi disposer d'informations sur l'écart entre les trajectoires consignes (telles qu'il est possible de les estimer ou de les mesurer) et les trajectoires réellement suivies (ou sur une ou des grandeurs directement associées). Ces informations permettront de construire une ou plusieurs variables d'écart que l'opérateur devra manuellement minimiser en réalisant les changements de direction nécessaires. L'unité de commande du système, à savoir l'unité 5, pourra proposer à l'opérateur des stratégies de décision adaptées au travers de l'interface 8 de dialogue homme-machine mis en place. Ce mode de fonctionnement semi-automatisé correspond à un fonctionnement de type "aide à la conduite et à la prise de décision".

Dans le cas d'un fonctionnement automatisé, l'unité maître 5 définit elle-même les actions correctrices à réaliser et, sur la base de son algorithme de commande, l'unité maître 5 prend le contrôle des organes nécessaires à la mise en oeuvre de ces actions. Pour des raisons de sécurité, l'opérateur peut reprendre manuellement le contrôle de l'ensemble tracteur-machines.

4. L'unité 5 de calcul et de commande de la ou d'une des machines 3, 3', 3" (tractée ou semi-portée) commande l'opération ou une des opérations techniques souhaitées (travail du sol, entretien des cultures, récolte, ...) et pilote la réalisation semi-automatisée ou automatisées des manoeuvres souhaitées.

Dans le cadre d'un mode de fonctionnement semi-automatique, il est prévu :

- qu'une unité 5 d'une des machines 3 attelée au tracteur 2 (par exemple le semoir) ou qu'une machine 3 semi-portée par le tracteur 2 fasse les calculs nécessaires à l'établissement des trajectoires à suivre et dispose d'une interface 8 de communication avec le conducteur,
- que l'ensemble des machines concernées (tracteur 2 inclus) disposent des capteurs et des éléments de transmission des informations correspondant (via une liaison électronique, par exemple une liaison "ISOBUS", ou via une liaison sans fil) vers l'unité maître 5 en charge de la gestion des opérations de demi-tour.

Dans le cadre d'un mode de fonctionnement automatique, il est prévu :

- que l'unité 5, 5', 5" de l'une des machines 3, 3', 3" attelée au tracteur 2 (par exemple le semoir) ou d'une machine semi-portée par le tracteur fasse les calculs nécessaires à l'établissement des trajectoires à suivre et dispose d'une interface 8 de communication avec le conducteur,
- que l'ensemble des machines 3, 3', 3" concernées (tracteur 2 inclus) disposent des capteurs et des éléments de transmission des informations correspondant (via une liaison électronique, par exemple une liaison "ISOBUS", ou via une liaison sans fil) vers l'unité maître 5 en charge de la gestion des opérations de demi-tour,
- que l'unité 5 d'une des machines, attelée au tracteur (par exemple le semoir) ou d'une machine semi-portée par le tracteur, pilote le tracteur lors de manoeuvres répétitives (par exemple lors des opérations de demi-tour). La machine 3 qui pilote le tracteur 2 lors de ces manoeuvres doit donc prendre le contrôle des organes nécessaires dans le cadre d'un dispositif technique adapté, par exemple un dispositif du type "Tractor Implement Management". Elle le fait via une liaison électronique (par exemple une liaison "ISOBUS") ou via une liaison sans fil, en vue de réaliser les opérations prévues par l'algorithme de commande.

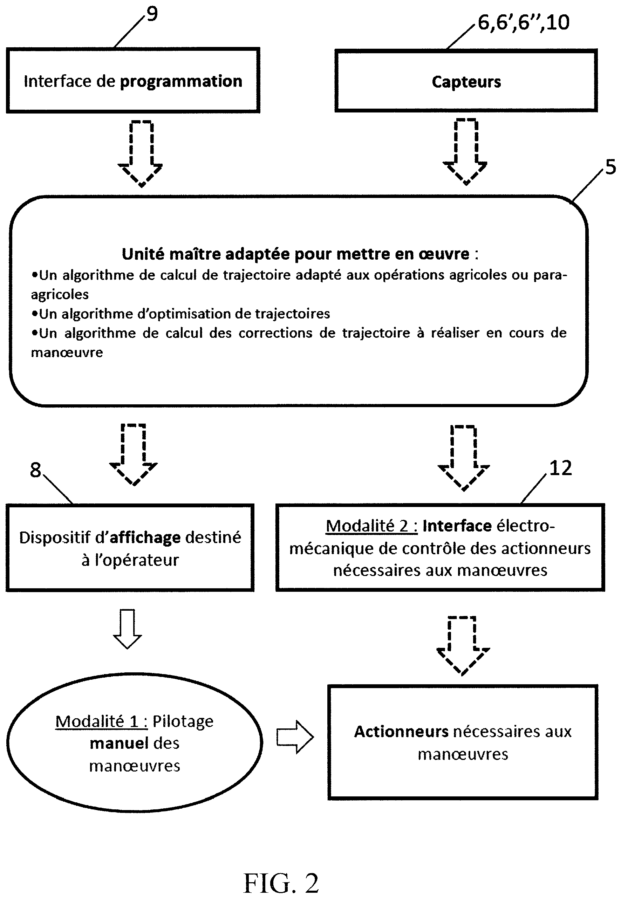

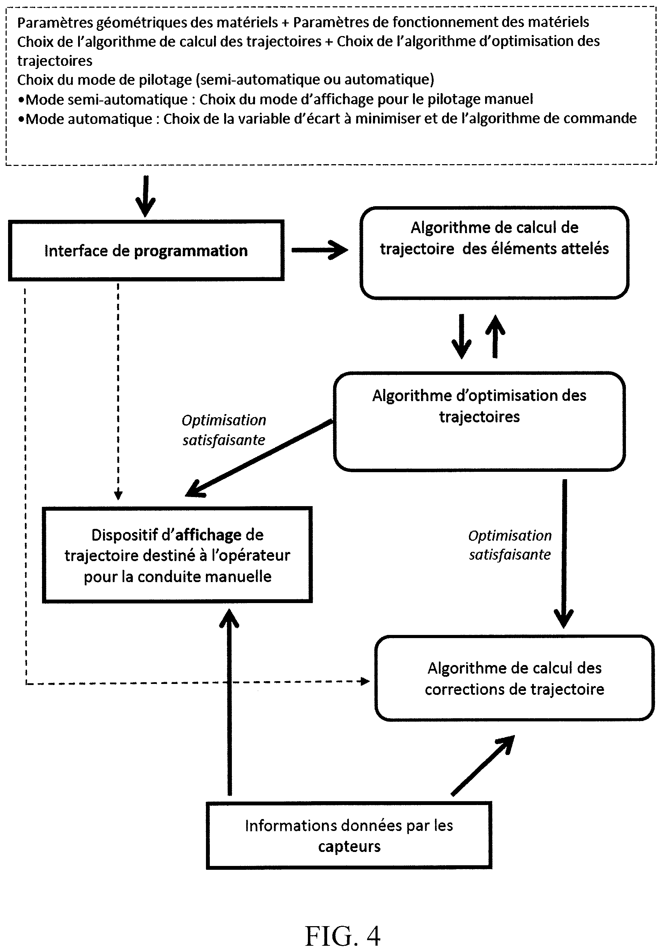

Plus précisément et comme le montre symboliquement au moins en partie les figures 1 à 4, le système de gestion et de guidage des manoeuvres comprend :

- Un algorithme de calcul de trajectoire permettant de prédire les trajectoires des éléments de l'ensemble tracteur-machines (moteur de calcul permettant de déterminer les trajectoires de l'ensemble attelé).
- Un algorithme d'optimisation de trajectoires (détermination des trajectoires consignes retenues en fonction d'un objectif déterminé).
- Un algorithme de calcul des corrections de trajectoire à réaliser en cours de manoeuvre encore appelé algorithme de commande (optionnel pour le fonctionnement en mode semi-automatique).
- Un programme de gestion dont le rôle est notamment de gérer les relations entre les algorithmes, d'assurer un bon échange d'informations au niveau des interfaces d'entrées et de sortie de l'unité maître 5 de calcul et de commande et d'assurer le bon déroulement des fonctions attendues au niveau du système (lancement ou arrêt d'une séquence de pilotage d'une manoeuvre, mode d'arrêt d'urgence ou mode de marche dégradée, etc).
- Une unité maître 5 de calcul et de commande (dispositif informatique) qui est notamment programmée pour réaliser les opérations exigées par les algorithmes précités, traite les flux de données entrantes et sortantes. Elle est située sur l'une des machines tractée ou sur une machine semi-portée.
- Au moins une interface 9 de programmation de l'unité maître 5 de calcul et de commande. Une de ces interfaces peut éventuellement être déportée au niveau du tracteur.
- Au moins une interface de communication 8 avec un dispositif d'affichage destiné à informer l'opérateur et à faciliter le dialogue homme-machine. Un de ces dispositifs d'affichage est avantageusement déporté au niveau du tracteur.
- Une interface permettant la récupération par l'unité maître 5 de calcul et de commande des informations issues de capteurs 6, 6', 6", 10 placés sur le tracteur ou les machines de l'ensemble attelé.
- Une interface 12 permettant la prise de contrôle des organes de puissance nécessaires par l'unité maître 5 de calcul et de commande dans le cas d'un mode de fonctionnement automatique.

L'algorithme de calcul des trajectoires est paramétré par l'opérateur avec des grandeurs physiques liées au matériel utilisé et liées aux opérations agricoles réalisées. Les valeurs de paramétrage que l'opérateur doit renseigner sont celle évoquées précédemment.

L'algorithme d'optimisation de trajectoire est paramétré par l'opérateur avec les contraintes d'objectif désirées par l'opérateur (par exemple la largeur maximale de la fourrière) et les choix de l'opérateur en matière de mode d'optimisation (précision, choix d'algorithme, point de départ de l'optimisation, ...).

L'algorithme de calcul des corrections de trajectoire est aussi paramétré par l'opérateur en fonction du mode de fonctionnement utilisé (mode semi-automatique ou automatique) notamment :

- Afin de réaliser des calculs de corrections de trajectoire adaptés (mode semi-automatique ou automatique). Un paramétrage par défaut peut être proposé.
- Afin d'assurer un bon affichage des consignes et informations destinées à l'opérateur (en mode semi-automatique).
- Afin d'assurer un bon affichage des informations destinées à l'opérateur (en mode automatique) et afin de paramétrer l'algorithme de correction de trajectoire (en mode automatique).

Il est rappelé que l'algorithme de correction de trajectoire est optionnel dans le cas d'un dispositif de pilotage semi-automatique.

Le programme de gestion générale est aussi paramétré par l'opérateur afin d'assurer le bon fonctionnement des interfaces d'entrées et de sortie du calculateur et, d'une façon générale, afin d'assurer le bon déroulement des fonctions attendues au niveau du système de gestion et de guidage des manoeuvres.

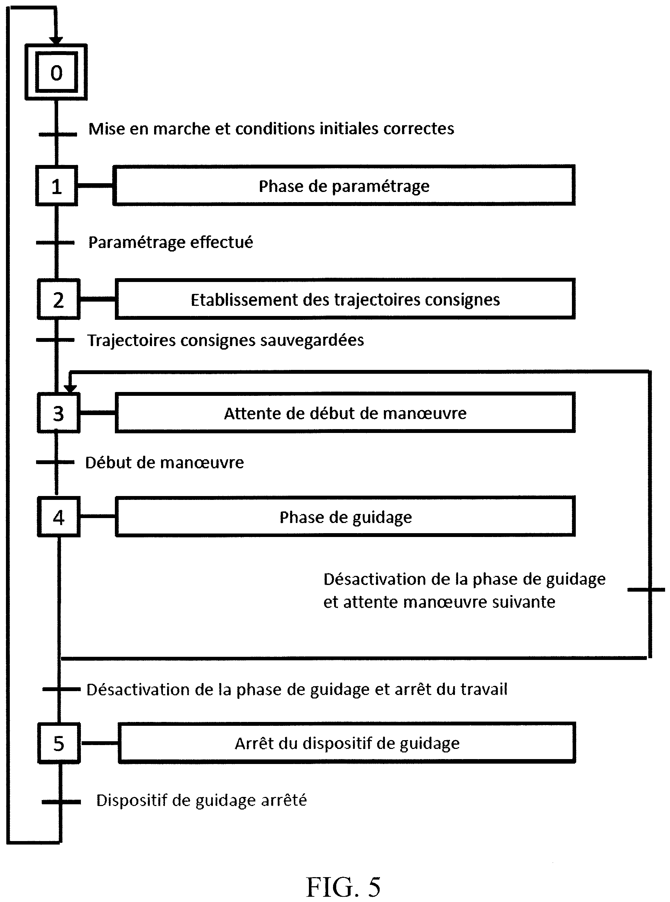

Un déroulement possible d'une séquence de pilotage est illustré sur la figure 5 (sous forme de Grafcet).

Le contrôle de la trajectoire de l'ensemble tracteur-machines peut être réalisé en mode semi-automatique ou en mode automatique.

Dans tous les cas, une séquence de pilotage et de gestion de la manoeuvre selon l'invention suit le cycle suivant (voir figure 5) :

0) Mise en marche. La mise en marche est effective si les conditions initiales de fonctionnement sont réunies et que l'opérateur demande la mise en marche du système de gestion et de guidage des manoeuvres. La mise en marche correspond à la transition entre l'étape 0 et l'étape 1.

1) Paramétrage du système. Il est possible de conserver en mémoire une série de paramétrages antérieurs et de les rappeler sur le système pour gagner du temps.

2) Etablissement des trajectoires consignes. L'algorithme de calcul des trajectoires teste des simulations de trajectoires selon les instructions de l'algorithme d'optimisation de trajectoire. Une fois les critères d'objectif atteint, la ou les trajectoires consignes sont retenues et mémorisées. Ces trajectoires consignes peuvent être définies par des variables liées à la position relative des éléments articulés entre eux (angle de pliage etc). Les consignes de trajectoire peuvent inclure des renseignements sur la vitesse d'avancement des véhicules. Les trajectoires établies peuvent être mémorisées et rappelés pour une utilisation ultérieure en évitant la phase de calcul.

3) Attente de début de manoeuvre. Il y a ensuite une étape d'attente du déclenchement de la manoeuvre pendant laquelle le système de gestion et de guidage ne réalise pas de guidage de l'ensemble tracteur-outils. C'est l'opérateur ou un système optionnel de localisation qui déclenche le début de la séquence de guidage d'une manoeuvre par le système selon l'invention.

4) Phase de guidage. Une fois la manoeuvre débutée et le guidage activé, le système de gestion et de guidage est actif et pilote le tracteur 2 d'une façon semi-automatisée ou automatisée afin de suivre la trajectoire optimisée prédéfinie avec ou sans utilisation d'un système GPS. L'opérateur peut être informé par le dispositif d'affichage sur le déroulement des opérations contrôlées ou calculées par le système de gestion et de guidage. Selon une disposition optionnelle, il peut être prévu de recalculer en cours de manoeuvre de nouvelles trajectoires consignes en cas d'événement imprévu ou d'ajuster le paramétrage de l'algorithme de correction de trajectoire (afin de corriger des écarts de trajectoires significatifs).

Transition 4) - 5) Désactivation de l'étape de guidage. Le système de gestion et de guidage peut être désactivé manuellement à tout instant et se désactive automatiquement une fois la manoeuvre terminée. L'opérateur peut, par exemple, désactiver le système en fin de trajectoire pour corriger manuellement une dérive éventuelle. Une fois la manoeuvre terminée, le programme de gestion retourne en étape d'attente jusqu'à la manoeuvre suivante.

5) Arrêt du dispositif de pilotage. L'opérateur peut arrêter le fonctionnement du système de gestion et de guidage semi-automatique ou automatique à tout moment (en particulier lorsque le travail au champ est terminé). Chaque étape doit donc être reliée à cette étape d'arrêt (non représenté sur la figure 5). Le système s'arrête dans des conditions satisfaisantes de sécurité.

Le Grafcet qui vient d'être décrit à titre d'exemple correspond à un mode de marche dit "normal" du système. Les modes d'arrêt d'urgence ou les modes de marche dégradée (tels qu'on les nomme usuellement lors d'une démarche d'automatisation utilisant des outils Grafcet) n'ont pas été décrits dans ce Grafcet de marche normale, mais peuvent aisément en être déduits par l'homme du métier.

Dans le cadre de l'exécution des phases opératoires du procédé, l'établissement des trajectoires consignes a lieu après la phase de paramétrage. Dans une évolution possible de l'invention, il peut aussi avoir lieu en cours de manoeuvre en cas d'événement imprévu.

L'algorithme de calcul des trajectoires suit les instructions envoyées par l'algorithme d'optimisation de trajectoire pour faire la première simulation de trajectoire (conditions initiales du calcul), puis pour incrémenter les simulations (tester de nouvelles trajectoires susceptibles de donner de meilleurs résultats) ou pour cesser un calcul ou une série de calculs lorsqu'un résultat satisfaisant est trouvé. Ce résultat devient la trajectoire consigne (ou les trajectoires consignes) à respecter. Les trajectoires établies peuvent être mémorisées et rappelés pour une utilisation ultérieure en évitant la phase de calcul.

Au moyen d'un modèle, les inventeurs ont pu simuler des demi-tours (ou d'autres manoeuvres de changement de direction) pour un tracteur et plusieurs machines attelées avec une précision acceptable à condition que l'opérateur corrige la "dérive" observée en fin de course. L'origine de la dérive observée est liée à la résistance du sol qui exerce des réactions sur les roues directrices qui s'enfoncent dans le sol. Le modèle utilisé était basé sur des équations fondamentales divulguées dans la publication Zakin J. 1967, "Applied theory of the articulated lorry" (Théorie appliquée du camion articulé), Monograph // Закин Я.Х. Прикладная теория движения автопоезда. - М.: Транспорт, 1967 - 252 с. et a été adapté au cas des engins agricoles. Le modèle prend aussi en compte les interactions entre le sol et les roues des véhicules ainsi que les interactions mécaniques qui ont lieu au niveau des articulations entre les machines (frottements). Ce modèle cité à titre d'exemple est utilisé dans la réalisation détaillée ci-après en tant que moteur mathématique de l'algorithme de calcul de trajectoire.

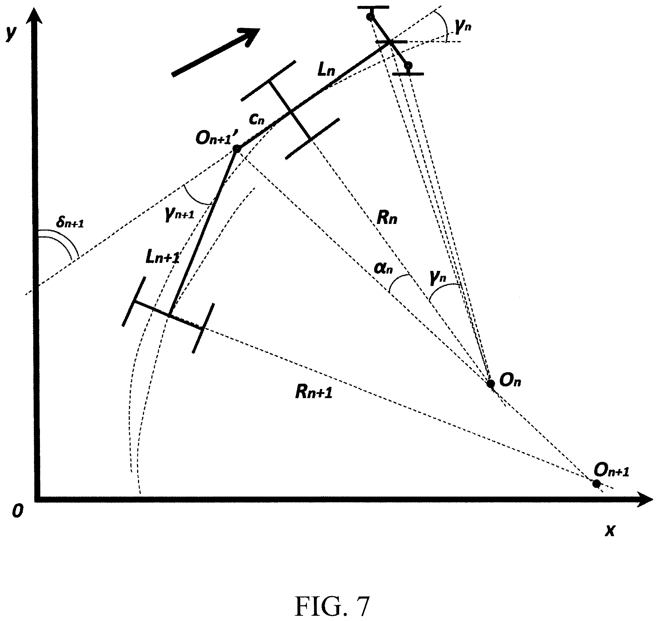

Géométriquement pour un élément quelconque d'un ensemble polyarticulé du type attelage agricole, l'angle de braquage est l'angle entre les deux axes, liant le centre instantané de rotation et les centres des ponts avant et arrière (voir figure 7) :

$$\gamma_n = arctg\,\frac{L_n}{R_n}$$

avec : $L_n$ - L'empattement de l'élément $n$,
$\gamma_n$ - L'angle de braquage de l'élément $n$,
$R_n$ - Le rayon du braquage de l'élément n,

$O_n$ - Le centre de rotation à un instant donné de l'élément $n$,

$O_{n+1}'$ - Le point d'articulation entre l'élément $n$ et l'élément $n+1$.

Dans la formule précédente, on a : $n=2$ pour le tracteur 2, $n=3$ pour le premier élément attelé 3, $n=4$ pour le second élément attelé 3', etc. La vitesse angulaire $\omega_2$ de braquage des roues 2' directrices du tracteur va définir le comportement de l'ensemble tracteur-1ère machine attelée, puis par conséquence celui des machines suivantes. Cette action est caractérisée par une grandeur $k_n$ (appelée paramètre du régime de demi-tour) qui caractérise le changement de courbure de trajectoire obtenu rapporté à la distance parcourue sur la courbe de braquage, et vaut (d'après Zakin J. - 1967):

$$k_n = \frac{\gamma_n}{S_n} = \frac{\dot{\gamma}_n}{v_n}, \quad [m^{-1}]$$

avec : $S_n$ - La distance parcourue sur une trajectoire donnée.

Dans le cas du tracteur, et en considérant que le mouvement se fait sur une surface idéale et plane, sans glissement ou influence du sol sur la direction prise par le mouvement, on peut considérer (selon Zakin J. - 1967) que :

$$k_2 = \frac{\dot{\gamma}_2}{v_2} = \frac{\omega_2}{v_2}, \quad [m^{-1}]$$

Les inventeurs ont, dans le cadre de la présente invention, développé des équations et une méthode spécifique permettant de tenir compte des cas non-idéaux, pour lesquels les trajectoires des engins agricoles sont influencées par leur interactions avec le sol. Dans ce cas, il est possible de remplacer l'angle de braquage des roues du tracteur par un angle $\gamma_2$ de braquage corrigé (ou "réel") $\gamma_{2c}$ qui tient compte des interactions avec le sol.

Si le tracteur est équipé d'un système de géolocalisation, il est directement possible de remplacer $\gamma_2$ par $\gamma_{2c}$ dans l'équation ci-dessus puisqu'on pourra mesurer $\gamma_{2c}$ par géolocalisation. En l'absence de système de géolocalisation, on définit une loi mathématique d'étalonnage entre $\gamma_2$, $\omega_2$ et $\gamma_{2c}$ du type :

$$\gamma_{2c} = A.\gamma_2^a + B.\omega_2^b + C$$

avec : A, a, B, b et C correspondant à des paramètres numériques d'ajustement.

Dans tous les cas, les valeurs de $\gamma_{2c}$ sont amenées à remplacer les valeurs de $\gamma_2$ dans les équations de simulation de trajectoire lorsque les interactions avec le sol sont estimées comme étant significatives.

En effet, une telle loi d'étalonnage permet de s'approcher des résultats obtenus par la demanderesse et les inventeurs au cours d'essais sur le terrain. Elle permet aussi de répondre aux cas tenant compte des phénomènes de glissement (ou dérapage) sur sol agricole. Dans le cas d'une adhérence parfaite (sans dérapage latéral ou longitudinal), on a $a=b=1$ et seule la résistance de la terre de chaque côté des roues directrices du tracteur (qui s'enfoncent partiellement dans le sol) s'oppose, d'une part, au braquage (effet direct sur $\gamma_2$) et, d'autre part, au déplacement latéral des roues directrices lorsqu'on tourne le volant (effet direct sur $\omega_2$). Cette résistance de la terre de chaque côté des roues directrices crée donc un angle de dérive ($\gamma_{2c}$ - $\gamma_2$). Le paramétrage de l'équation est fait par ajustement avec l'expérience (méthode par approximations successives), d'après une base de données ou selon une méthode de calibrage lors de l'essai d'une manoeuvre type.

Le comportement des éléments trainés est conditionné par le changement de direction de la force de traction qui s'exerce sur le point d'attelage correspondant. Analogiquement, la trajectoire de l'élément $n+1$ sera une dérivée de la trajectoire de l'élément précédent. L'équation différentielle d'évolution de l'angle de pliage entre deux éléments peut être déduite de la publication précitée Zakin J. (1967) :

$$\frac{d\gamma_{n+1}}{dt} + \frac{v_n \sin(\frac{1}{i_n}\gamma_{n+1} - \alpha_n)}{L_{n+1}\cos(\alpha_n)\cos(\frac{1}{i_n} - 1)\gamma_{n+1}} = \frac{v_n}{L_{n+1}}\tan(\gamma_n)$$

Dans cette équation, on a :

$\alpha_n$ - L'angle formé entre l'axe passant par le centre cinématique d'un élément-tracteur $n$ avec le centre instantané de rotation de l'élément tracté $n+1$, et l'axe liant le point d'attelage avec ce centre instantané de rotation de rotation de l'élément tracté $n+1$,

$i_n$ - Le rapport de liaison mécanique direct des éléments attelés $n$ et $n+1$.

Le rapport de liaison mécanique $i_n$ permet de prendre en compte les imperfections des points d'articulation entre éléments attelés (frottements, ...) dans la transmission des mouvements et des changements de direction. Les inventeurs ont développé des équations et une méthode permettant de tenir compte des cas non-idéaux dans l'expression de $i_n$ (ou en utilisant d'autres paramètres non divulgués dans la publication de Zakin, 1967), lorsque les trajectoires des engins agricoles sont influencées par les frottements ou les résistances mécaniques pouvant exister au niveau des points d'articulation entre éléments attelés.

Les interactions mécaniques qui ont lieu au niveau des articulations entre les machines (frottements, ...) peuvent donc être prises en compte grâce à une fonction mathématique qui modifie par exemple la valeur de $i_n$ en $i_{nc}$ (rapport de liaison mécanique corrigé ou "réel"). Par conséquent, on utilisera une loi générale (qui se simplifie dans les cas simples) pour estimer $i_{nc}$, à savoir :

$$i_{nc} = A'.i_n^{a'} + C'$$

avec : *A', a'* et C correspondant à des paramètres numériques d'ajustement. Pour une articulation idéale, on a : *A'=a'=C'=1.*

Le mouvement de l'élément $n+1$ peut être influencé aussi par le comportement au sol des roues de l'élément précédent même si ce dernier n'est pas le tracteur (selon le même principe décrit précédemment pour les roues du tracteur). En effet, la direction de traction peut-être différente de celle donnée par l'angle $\gamma_{n+1}$ lorsqu'un angle de glissement peut-être détecté. Même si les roues de l'élément $n$ ne sont pas directrices, la terre de chaque côté des roues de l'élément $n$ peut exercer une résistance au virage. On peut remplacer dans les équations $\gamma_{n+1}$ par $\gamma_{n+1c}$ selon une loi mathématique d'étalonnage analogue à celle du cas précité du tracteur :

$$\gamma_{n+1c} = A_n.\gamma_n^{a_n} + B_n.\omega_n^{b_n} + C_n$$

avec : $A_n$, $a_n$, $B_n$, $b_n$ et C correspondant à des paramètres numériques d'ajustement. Si l'élément $n$ ne possède pas de roues directrices, B vaut zéro.

Ces équations et les lois évoquées précédemment permettent de construire des simulations de trajectoires pour le tracteur et les éléments attelés, même pour des cas complexes. Dans des cas simples, il ne sera pas nécessaire de modifier les valeurs des angles de braquage, de pliage ou le rapport de liaison mécanique en des valeurs corrigées.

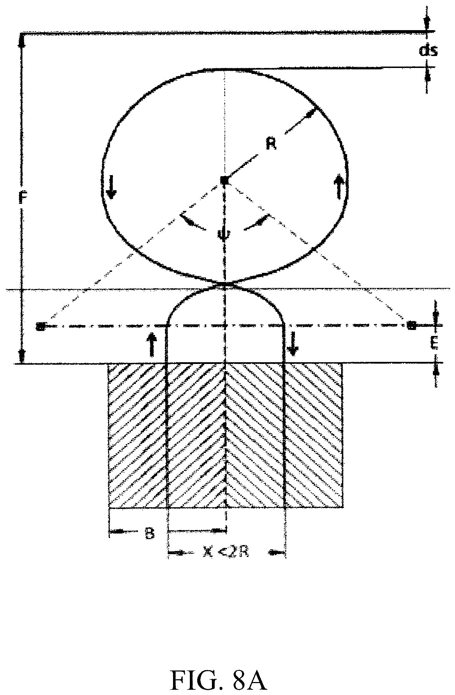

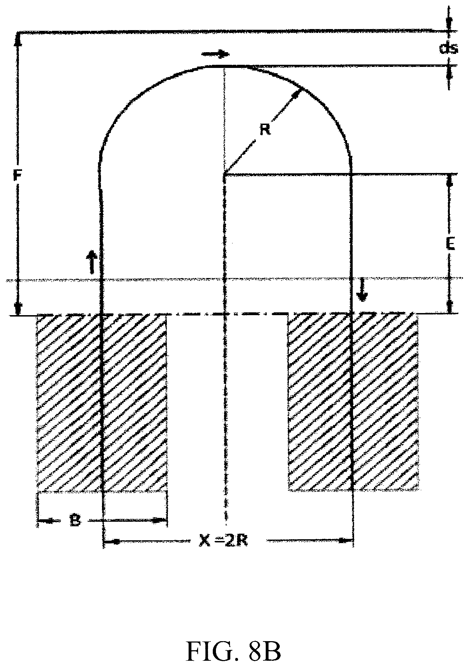

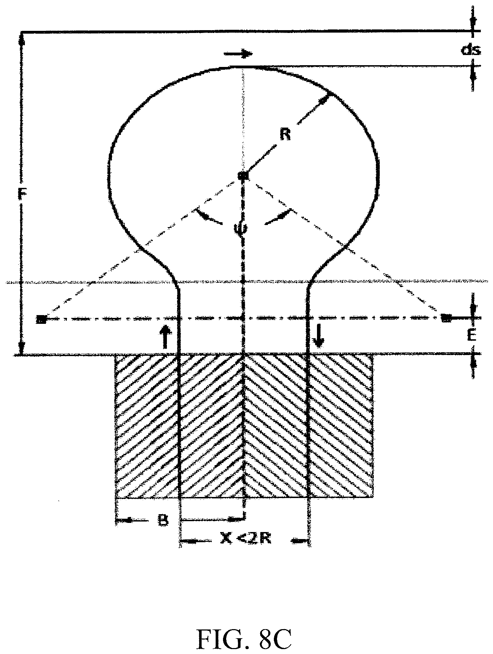

Le tableau ci-dessous donne un exemple de modèle développé (calcul de l'angle de pliage entre le tracteur 2 et la première composante opérationnelle 3 attelée). Dans le cadre de cet exemple, le tracteur peut décrire une trajectoire de virage quelconque. Un demi-tour dit en "fer à cheval" fait partie de ces trajectoires. Les figures 8 présentent des exemples de demi-tours utilisables en bout de champ et simulables (figure 8A : demi-tour en boucle croisée / figure 8B : demi-tour en demi-cercle / figure 8C : demi-tour en "fer à cheval" ou en lacet). Par exemple, pour réaliser un demi-tour en fer à cheval, le tracteur 2 suit tout d'abord une trajectoire rectiligne, puis une phase d'entrée transitoire, puis une phase de mouvement circulaire à angle de braquage constant, puis une phase de sortie transitoire pour retrouver ensuite une trajectoire rectiligne. Dans le cas présenté, les interactions avec le sol ou les frottements mécaniques aux articulations sont dans un premier temps considérées comme négligeables.

| Phase de manœuvre | Paramètre-clef | Equation |
|---|---|---|
| Phases transitoires d'entrée et de sortie du tracteur | $\gamma_2$ | $$\begin{cases} x_0 = \dfrac{1}{k_2} \displaystyle\int_0^{\gamma_{2max}} \cos(-\dfrac{1}{k_2 L_2} \ln \cos\gamma_2) d\gamma_2 \\ y_0 = \dfrac{1}{k_2} \displaystyle\int_0^{\gamma_{2max}} \sin(-\dfrac{1}{k_2 L_2} \ln \cos\gamma_2) d\gamma_2 \end{cases}$$ |
| Mouvement circulaire du tracteur | $\delta_{2\,max}$ | $$\begin{cases} x_c = x_0 + R_{2min} \cos\delta_{2max} \\ y_c = y_0 - R_{2min} \sin\delta_{2max} \end{cases}$$ |
| Angle de pliage définissant la trajectoire de l'éléments attelé suivant | $\gamma_n$ | $$\frac{d\gamma_{n+1}}{dt} + \frac{v_n \sin(\frac{1}{i_n}\gamma_{n+1} - \alpha_n)}{L_{n+1} \cos(\alpha_n) \cos(\frac{1}{i_n} - 1)\gamma_{n+1}} = \frac{v_n}{L_{n+1}} \tan(\gamma_n)$$ |

Dans ce tableau, les paramètres et variables suivants sont mentionnés :

$\delta_{2\,max}$ - L'angle d'écart du tracteur par rapport à la direction initiale ;

$k_2$ - Le coefficient de régime lié au tracteur ;

$L_2$, $L_{n+1}$ - Les empattements de l'élément tracteur et d'un élément attelé ;

$\gamma_2$ - L'angle de braquage du tracteur ;

$\gamma_n$, $\gamma_{n+1}$ - Les angles de pliage de deux éléments attelés successifs ;

$x_0$, $y_0$, - Les coordonnées de la trajectoire du tracteur ;

$x_c$, $y_c$ - Les coordonnées du centre de la trajectoire circulaire ;

$R_{2min}$ - Le rayon du braquage ;

$\alpha_n$ - L'angle formé par l'axe liant le centre cinématique d'un élément-tracteur avec le centre instantané de rotation et l'axe liant le pont d'attelage avec ce centre de rotation ;

$i_n$ - Le rapport de liaison mécanique direct des éléments tel que décrit par Zakin J. (1967).

Si nécessaire, les interactions avec le sol sont ensuite intégrées à ce modèle pour déterminer la trajectoire obtenue grâce à une fonction mathématique qui permet de déterminer les conséquences des interactions entre le sol et les pneumatiques (notamment liées à l'angle de braquage des roues). Dans ce cas, on remplace l'angle de braquage $\gamma_2$ des roues du tracteur par un angle de braquage corrigé (ou "réel") $\gamma_{2c}$ qui tient compte des interactions avec le sol comme décrit précédemment. Les interactions mécaniques qui ont lieu au niveau des articulations entre les machines (frottements, ...) peuvent être pris en compte grâce à une fonction mathématique qui modifie par exemple la valeur de $i_n$ en en $i_{nc}$ (rapport de liaison mécanique corrigé ou "réel"), ou qui modifie par exemple la valeur de l'angle de pliage $\gamma_n$ en angle de pliage corrigé (ou réel) $\gamma_{nc}$. Ces modifications sont réalisées comme décrit précédemment.

A ce stade, on dispose d'un moyen pour simuler la trajectoire du tracteur et de ses éléments attelés.

L'algorithme d'optimisation de trajectoires peut quant à lui fonctionner selon plusieurs principes. Tout d'abord, il peut travailler de façon systématique sur un domaine expérimental borné (avec des limites) en incrémentant d'un pas fixé à l'avance chaque calcul successif. Pour un essai en une dimension cela veut dire, par exemple, tester une vitesse de braquage allant de 0,01 rad/s à 1 rad/s avec un pas de 0,01 rad/s. Parmi les trajectoires calculées, la trajectoire consigne (ou les trajectoires consignes si on parle de l'ensemble des trajectoires des machines 3, 3', 3" et du tracteur 2) retenue par l'algorithme d'optimisation sera celle qui maximisera l'objectif fixé par l'opérateur (par exemple minimiser la distance parcourue pendant la manoeuvre).

Il est possible, au niveau de l'algorithme d'optimisation, de réduire le nombre de calculs à réaliser en utilisant une "méthode d'optimisation directe". On entend par méthode d'optimisation directe une succession d'essais-erreur visant à un résultat tout en minimisant le nombre d'essais à réaliser. Ces méthodes sont connues, par exemple, des publications suivantes : Fiat, O. (2007), "Utilisation et développement de la méthode du Simplexe - Nouvelles procédures d'optimisation de la démarche expérimentale", Thèse de Doctorat, Université de Limoges, 188 p. ; Porte, C. (2002), "Méthodes directes d'optimisation - Méthodes à une variable et Simplexe", Techniques de l'Ingénieur, P228, 1-18 ; Porte, C. (2002), "Méthodes directes d'optimisation - Méthodes dérivées de la méthode Simplexe - Méthode de Nelder et Mead (Modified Simplex)", Techniques de l'Ingénieur, P229, 1-15.

Ces méthodes fonctionnent aussi bien pour une étude mono variable que pour une étude multivariables. Les plus connues des méthodes pour une étude monovariable est celle de la suite de Fibonacci et la méthode la plus connue pour une étude multivariables est la méthode du simplexe. Ces méthodes sont applicables dans le cadre de l'invention et dès que des trajectoires acceptables (respectant les objectifs minimum fixés par l'opérateur) sont atteintes, l'optimisation est terminée et les trajectoires consigne sont fixées.

On décrit ci-après, de manière plus détaillée et à titre d'exemples non limitatifs, les contrôles de trajectoires en cours d'exécution d'une manoeuvre, successivement en modes de fonctionnement semi-automatique et automatique du système de gestion et de guidage (pilotage) de manoeuvres.

Dans le cas d'un fonctionnement automatisé, l'unité maître 5 définit elle-même les actions correctrices à réaliser et sur la base de son algorithme de commande, l'unité maître 5 prend le contrôle des organes nécessaires à la mise en oeuvre de ces actions correctrices. Pour des raisons de sécurité, l'opérateur peut reprendre manuellement le contrôle de l'ensemble tracteur-outils.

Par exemple, il y a prise du contrôle de la barre de direction du tracteur 2 (ou de son équivalent) par l'unité maître 5 de la machine 3. Le système de gestion et de guidage peut aussi prendre le contrôle de la vitesse d'avancement du tracteur. L'opérateur peut être informé par un dispositif d'affichage d'une interface de communication 8 sur le déroulement des opérations contrôlées par le système de guidage. L'opérateur peut, par exemple, désactiver le système de gestion et de guidage des manoeuvres en fin de trajectoire pour corriger une dérive éventuelle.

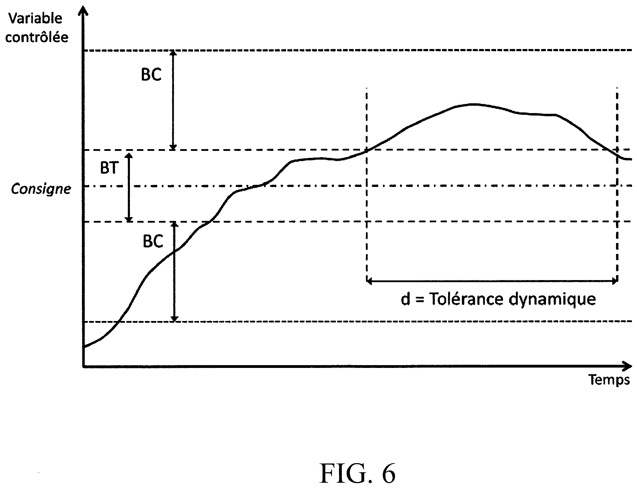

Il est possible d'utiliser pour le calcul des corrections de trajectoire notamment les paramètres connus suivants, illustrés sur la figure 6:

- Une "bande de tolérance" (BT) sans correction de trajectoire est définie autour de la trajectoire consigne. L'écart à un instant t entre la trajectoire consigne d'une machine 3, 3', 3" et sa trajectoire théorique est notée $E_{tn}$, avec n la position relative de la machine concernée dans l'attelage (n=1 pour le tracteur, n=2 pour la première machine attelée, etc). Il n'y a pas de correction de trajectoire si $E_{tn}$ est situé dans la bande de tolérance BT.
- Une "bande de correction de trajectoire" (BC) autour de la trajectoire consigne est définie. Si l'écart entre la trajectoire réelle et la trajectoire consigne du tracteur 2 est au-delà de cette bande de correction de trajectoire, le tracteur tournera à droite ou à gauche au maximum de ses possibilités.
- Une tolérance dynamique (d) qui représente une durée tolérable maximale de sortie de la bande de tolérance. En cas d'écart, les trajectoires doivent être corrigées en un temps inférieur à d.

A l'intérieur de la bande de correction de trajectoire et en dehors de la bande de tolérance, les corrections de trajectoire peuvent être calculées selon un mode de régulation PID, simplifié en une combinaison linéaire de ses composantes (action Proportionnelle, action Intégrale, action Dérivée), ou peuvent être calculées selon un mode de régulation en logique floue.

En relation avec la régulation PID, des exemples d'application en asservissement de position (donc en suivi de trajectoire) sont donnés par la publication suivante : Jacob D. (2004), Applications de la commande PID - Asservissement température et position, Techniques de l'Ingénieur, S 7 718, 2-24.

L'utilisation de la logique floue pour le guidage d'un véhicule est, par exemple, connue de Yung, N.H.C. & Cang Y. (1999), "An intelligent mobile vehicle navigator based on fuzzy logic and reinforcement learning" (un navigateur de véhicule mobile intelligent basé sur la logique floue et l'apprentissage de renforcement), Systems, Man, and Cybernetics, Part B: Cybernetics, IEEE Transactions on, vol. 29, n° 2, 314-321. Une tentative d'application de la logique floue pour le guidage du pulvérisateur agricole est décrite dans Cho S. I. & KI N. H. (1999), "Autonomous speed sprayer guidance using machine vision and fuzzy logic" (guidage d'un pulvérisateur rapide autonome utilisant la vision machine et la logique floue), Transactions of the ASAE, vol. 42, n° 4, 1137-1143. D'une façon générale, ces protocoles répondent aux règles de base de la régulation en logique floue telles qu'évoquées par exemple dans Bühler H. (1994), "Réglage par logique floue", Ed. Presses Polytechniques et Universitaires Romandes, 181 p.

Le paramétrage de la correction de trajectoire peut être ajusté par l'opérateur (bande de tolérance, bande de correction de trajectoire, paramètres de régulation PID, paramètres de régulation en logique floue ou autre modalité). A ce sujet, on peut citer la méthode par approximations successives (CERR M. (1991), Instrumentation industrielle, Tome 2, Col. Tec et Doc, Ed. Lavoisier, 747 p., en particulier pages 273 et 274). Il est aussi possible de réaliser un processus d'identification (Méthode du Nyquist, de Strejc, de Broïda, de Ziegler et Nichols, de Dindeleux) en faisant réaliser une manoeuvre de façon manuelle à l'ensemble poly-articulé, puis en en faisant une modélisation mathématique.

Le paramétrage peut aussi être réalisé en mode auto adaptatif (le paramétrage s'optimise de lui-même en fonction des écarts résiduels persistants entre la consigne et les trajectoires suivies). De nombreux correcteurs auto-adaptatifs existent (M'Saad M. & Chebassier J. (2000), Commande adaptative des systèmes, Techniques de l'Ingénieur, S7 426, 1-25). Ces méthodes s'appliquent aussi bien à la régulation PID qu'à la logique floue. La "couche" intelligente qui optimise la loi de commande du correcteur peut faire appel à différents principes dont les processus d'auto-apprentissage (par exemple de type réseau de neurones).

D'une façon générale, les modes de correction automatique proposés font partie des grandes familles d'asservissements utilisés en robotique mobile pour guider un véhicule, tels qu'ils sont par exemple décrits dans Fargeon C. & Quin J-P. (1993), "Robotique mobile", Ed. Teknea et DGA, 358 p., et en particulier dans les chapitres 5 et 9.

Il est possible de proposer un mode de régulation automatique par défaut. En raison de la vitesse de rotation du volant qui est limitée, une action intégrale est alors nécessaire (car il persisterait autrement un petit écart de trajectoire résiduel). En associant le gain du tracteur (obtenu par calibrage ou calculé grâce aux données constructeur) à la vitesse de rotation du volant fixée, on peut par exemple calculer une valeur de correction PI par défaut selon la méthode donnée par CERR (1991) qui se base sur des variables notées Tu et Tg obtenue après un essai. Il est aussi possible d'inclure un mode de régulation en logique floue par défaut dans l'invention construit sur le même principe.

Il est aussi rappelé qu'en mode de fonctionnement semi-automatique :

- la consigne est établie par l'unité maître 5,
- la mobilisation des actionneurs (au moins du tracteur 2) est réalisée par l'opérateur,

il est possible que l'unité maître 5 donne aussi des éléments d'information (suite à un calcul) sur les actions correctrices à réaliser et leur intensité (en fonction du niveau de développement du système d'aide à la conduite).

Dans le cas d'un mode de fonctionnement semi-automatisé avec une supervision humaine, plusieurs niveaux technologiques sont utilisables.

Au niveau le plus simple, un élément informera l'opérateur sur les trajectoires consignes à respecter (ou sur une ou des grandeurs directement associées comme des valeurs d'angles de pliage aux articulations entre deux composantes attelées, ou encore des valeurs d'angle de braquage de roues directrices). Ceci correspond à un fonctionnement de type "Monitoring" (surveillance) et l'opérateur réalise les opérations nécessaires pour obtenir ce résultat.

A un niveau supérieur d'assistance, l'opérateur peut aussi disposer d'informations sur l'écart entre les trajectoires consignes (telles qu'il est possible de les estimer ou de les mesurer) et les trajectoires réellement suivies (ou sur une ou des grandeurs directement associées). Ces informations permettront de construire une ou plusieurs variables d'écart que l'opérateur devra manuellement minimiser en réalisant les changements de direction nécessaires.

L'unité maître 5 de calcul et de commande du système peut proposer à l'opérateur des stratégies de décision adaptées au travers de l'interface 8 de communication et de dialogue homme-machine mis en place (par exemple il peut indiquer de tourner le volant plus vite ou moins vite dans une direction donnée). Ce mode de fonctionnement semi-automatisé correspond à un fonctionnement de type "aide à la conduite et à la prise de décision". Les modes de calcul sont, par exemple, similaires à ceux mis en oeuvre dans le cas d'un fonctionnement automatique et sont utilisables pour proposer des actions à réaliser par l'opérateur en mode "d'aide à la conduite". Mais un mode de calcul simplifié peut aussi être utilisé en mode semi-automatique. Ce mode simplifié est basé sur un correcteur en logique floue (voir par exemple Kaufman A. (1992), Introduction à la logique floue, Techniques de l'Ingénieur, A 120, R 7 032, 1-9).

En cours de manoeuvre, l'unité maître 5 du système de gestion et de guidage calcule les actions à réaliser au niveau des organes de puissance et de direction du tracteur 2 afin de suivre la trajectoire consigne associée au tracteur et de respecter les contraintes paramétrées par l'opérateur. Ce calcul peut, de façon optionnelle, être réalisé grâce à des données de géolocalisation fournies par exemple par un dispositif GPS. Ce calcul peut être effectué à partir des informations fournies par les capteurs de l'ensemble attelé 1 indépendamment d'un système de géolocalisation. Les calculs réalisés permettent de comparer la position réelle du tracteur et des machines attelées à leurs positions théoriques (telles que définies par leurs trajectoires consignes). L'écart entre la trajectoire réelle et la trajectoire consigne sera compensé par le système de gestion et de guidage. Pour cela, les caractéristiques liées aux machines 3, 3', 3" sont mises en mémoire par l'intermédiaire de l'interface 9 dans le système de gestion et de guidage. L'acquisition des caractéristiques des matériels (indépendamment du paramétrage de l'algorithme de correction de trajectoire) peut aussi être réalisée grâce à un paramétrage expérimental. Le paramétrage expérimental consiste à faire réaliser une opération au tracteur (par exemple une rotation du volant jusqu'à l'amener en butée à droite et à gauche suivie par un déplacement de l'ensemble polyarticulé avec enregistrement de l'évolution des angles de pliage entre éléments attelés) et le logiciel détermine ensuite les paramètres nécessaires à ses calculs. Des capteurs additionnels sont disposés sur les matériels agricoles pour compléter ou remplacer les informations fournies par le dispositif de géolocalisation (au moins des capteurs d'angles fixés sur les points d'articulation 4, 4', 4" des composantes de l'attelage ou des dispositifs de mesure infra-rouge de distance fixés sur les composantes de l'attelage).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, **tel que défini par les revendications annexées**.

## Revendications

1. Attelage comprenant, en tant que composantes opérationnelles constitutives, un tracteur (2) et au moins une machine agricole (3, 3', 3") tractée ou semi-portée, attelée directement audit tracteur (2) ou à une machine (3, 3') précédente dans l'attelage par au moins une liaison articulée (4, 4', 4"), ledit attelage (1) comprenant également un système de gestion et de guidage de manoeuvres, notamment de demi-tours, comportant au moins une unité (5, 5') de calcul et de commande, qui est intégrée à la ou à l'une des machine(s) attelée(s) (3, 3', 3") et qui est reliée, d'une part, à au moins un capteur (6, 6', 6") l'informant sur les positions relatives mutuelles courantes des deux composantes (2, 3 ; 3, 3' ; 3', 3") de chaque paire de composantes opérationnelles (2, 3, 3', 3") de l'attelage reliées entre elles par une liaison articulée (4, 4', 4"), d'autre part, à une unité (7) de gestion et de commande du tracteur (2) et/ou à une interface (8) de communication, notamment d'affichage et éventuellement de commande, avec le conducteur et, enfin, à au moins un moyen (9) de paramétrage ou de programmation, ces composantes fonctionnelles additionnelles, **formées par ledit au moins un capteur** (6, 6', 6"), **ladite unité (7) et/ou interface (8) et ledit moyen (9) de paramétrage ou de programmation et** auxquelles l'unité de calcul et de commande (5, 5') précitée est reliée, faisant également partie du système de gestion et de guidage de manoeuvres, attelage (1) **caractérisé en ce que** l'unité (5, 5') de calcul et de commande de la (3) ou d'une des machine(s) agricole(s) (3', 3") attelée(s) constitue l'unité maître du système de gestion et de guidage de manoeuvres et préférentiellement de l'attelage (1), et **en ce que l'unité (5,5') de calcul et de commande comporte des moyens qui, en coopération avec les composantes fonctionnelles additionnelles (6, 6', 6", 7, 8, 9) précitées, et** sous le contrôle d'un programme adapté de gestion des manoeuvres, **sont adaptés pour** :

   d'une part, à calculer une trajectoire de consigne pour au moins une manoeuvre à venir, déclenchée automatiquement ou par le conducteur, ce sur la base de paramètres préprogrammés relatifs aux caractéristiques et grandeurs physiques du tracteur (2) et de la ou des machine(s) (3, 3', 3") attelée(s), à des objectifs et/ou des contraintes lié(e)s au travail agricole à réaliser et au terrain à traiter et à des choix de fonctionnement de l'attelage (1) et en mettant en oeuvre un algorithme de prédiction de trajectoires et un algorithme d'optimisation de consignes de trajectoires et,
   d'autre part, exécuter automatiquement ladite manoeuvre ou assister une exécution semi-automatique de ladite manoeuvre, ce éventuellement de manière répétée, en pilotant le tracteur (2), directement ou par l'intermédiaire de l'unité (7) de gestion et de commande de ce dernier, et en relevant, en cours de manoeuvre, les écarts entre la trajectoire de consigne prédéfinie et la trajectoire réelle ou couramment estimée, pour les corriger automatiquement ou pour les signaler au conducteur en mode semi-automatique, éventuellement après calcul des manoeuvres de corrections de trajectoire à réaliser par l'intermédiaire d'un algorithme adapté.

2. Attelage selon la revendication 1, **caractérisé en ce qu'**il comprend également au moins un capteur additionnel (10) au niveau du tracteur (2) apte et destiné à fournir des informations sur l'angle de braquage des roues directionnelles (2'), la vitesse de rotation des roues motrices (2"), la vitesse absolue d'avancement, la position en hauteur de son attelage à trois points et/ou la vitesse d'entrainement de sa prise de force.

3. Attelage selon l'une quelconque des revendications 1 et 2, **caractérisé en ce qu'**il comprend au moins deux machines agricoles (3, 3') attelées en série l'une derrière l'autre au tracteur (2), la première machine (3) de la série étant reliée directement au tracteur (2) en étant tractée, portée ou semi-portée, la seconde machine (3'), ainsi que les éventuelles machines suivantes (3"), étant reliées de manière articulée à la machine (3, 3') qui les précède respectivement et **en ce qu'**au moins un capteur (6, 6', 6") fournissant un signal indicatif de la position relative mutuelle de deux composantes opérationnelles (2, 3, 3', 3") reliées entre elles par une liaison articulée (4, 4', 4") est associé à ou monté au niveau de la ou chaque liaison articulée (4, 4', 4").

4. Attelage selon l'une quelconque des revendications 1 à 3, **caractérisé en ce que** la ou chaque liaison articulée (4, 4', 4") présente au moins un degré de liberté sous forme de faculté de pivotement autour d'un axe de rotation vertical et/ou perpendiculaire au sol et **en ce que** le, certains ou chaque capteur(s) (6, 6', 6") associé(s) à la ou aux liaison(s) articulée(s) (4, 4', 4") fourni(ssen)t un signal indicatif de la configuration de la ou des liaison(s) articulée(s) (4, 4', 4") correspondante(s) autour de l'axe de rotation concerné.

5. Attelage selon l'une quelconque des revendications 1 à 4, **caractérisé en ce que** le tracteur (2) et/ou la ou au moins l'une des machines agricole(s) tractée(s) (3, 3', 3") est(sont) équipé(e)(s) d'une antenne de géolocalisation (11, 11') dont les données sont transmises à l'unité maître de calcul et de commande (5) et traitées par cette dernière, en mode de fonctionnement automatique, et/ou visualisées sur l'interface de communication (8).

6. Attelage selon la revendication 3 ou l'une quelconque des revendications 4 et 5, pour autant qu'elles dépendent de la revendication 3, **caractérisé en ce que** l'unité maître (5) de calcul et de commande, ainsi que le cas échéant l'antenne de géolocalisation (11), est(sont) montée(s) sur la première machine agricole (3) directement reliée au tracteur (2), lorsqu'elle est tractée ou semi-portée.

7. Attelage selon l'une quelconque des revendications 1 à 6, **caractérisé en ce que** l'unité maître de calcul et de commande (5) est reliée à une interface de commande de puissance (12) du tracteur (2), ou à l'unité de gestion et de commande (7) de ce dernier, par un bus de communication (13), ce bus (13) assurant également la transmission de données entre cette unité maître (5) et les autres composantes fonctionnelles (8, 10, 11') du système de gestion et de guidage, équipant éventuellement le tracteur (2).

8. Attelage selon l'une quelconque des revendications 1 à 7, **caractérisé en ce que** l'interface (8) de communication avec le conducteur comporte un moyen de sélection du mode de fonctionnement entre un fonctionnement à commande entièrement automatique, à commande semi-automatique ou à commande manuelle.

9. Procédé de gestion automatisée ou semi-automatisée de manoeuvres, notamment de demi-tours, d'un attelage (1) articulé ou poly-articulé comprenant un tracteur (2) et au moins une machine agricole (3, 3', 3") tractée ou semi-portée attelée directement audit tracteur (2), ou à une machine précédente dans l'attelage, par au moins une liaison articulée (4, 4', 4"), ainsi qu'un système de gestion et de guidage de manoeuvres, notamment de demi-tours, comportant une unité de calcul et de commande (5, 5'), qui est intégrée à la ou à l'une des machine(s) attelée(s), et qui est reliée, d'une part, à au moins un capteur (6, 6', 6") l'informant sur les positions relatives mutuelles courantes des deux composantes de chaque paire de composantes opérationnelles (2, 3, 3', 3") de l'attelage (1) reliées entre elles par une liaison articulée (4, 4', 4"), d'autre part, à une unité (7) de gestion et de commande du tracteur (2) et/ou à une interface (8) de communication, notamment d'affichage et éventuellement de commande, avec le conducteur et, enfin, à au moins un moyen (9) de paramétrage ou de programmation, ces composantes fonctionnelles additionnelles (6, 6', 6", 7, 8, 9) faisant également partie du système de gestion et de guidage de manoeuvres, procédé **caractérisé en ce qu'**il consiste, par l'intermédiaire de l'unité de calcul et de commande (5) de la machine agricole (3) considérée, agissant en tant qu'unité maître du système de gestion et de guidage des manoeuvres de l'attelage (1), et par exécution d'un programme adapté de gestion des manoeuvres, à calculer une trajectoire de consigne pour au moins une manoeuvre à venir, déclenchée automatiquement ou par le conducteur, ce sur la base de paramètres préprogrammés relatifs aux caractéristiques constructives, fonctionnelles et dimensionnelles pertinentes du tracteur (2) et de la ou des machine(s) (3, 3', 3") attelée(s), à des objectifs et/ou des contraintes lié(e)s au travail agricole à réaliser et au terrain à traiter et à des choix de fonctionnement de l'attelage (1) et en mettant en oeuvre un algorithme de prédiction de trajectoires et un algorithme d'optimisation de consignes de trajectoires, puis à exécuter automatiquement ladite manoeuvre ou à assister une exécution semi-automatique de ladite manoeuvre, ce éventuellement de manière répétée, en pilotant le tracteur (2), directement ou par l'intermédiaire de son unité (7) de gestion et de commande, et en relevant, en cours de manoeuvre, les écarts entre la trajectoire de consigne prédéfinie et la trajectoire réelle ou couramment estimée, pour les corriger automatiquement ou pour les signaler au conducteur en mode semi-automatique, éventuellement après calcul des mesures de correction de trajectoire à réaliser par mise en oeuvre d'un algorithme adapté.

10. Procédé selon la revendication 9, **caractérisé en ce qu'**il consiste, en mode de gestion semi-automatique d'une manoeuvre, à afficher, à l'intention de l'opérateur installé dans le tracteur (2) et préférentiellement par l'intermédiaire d'un dispositif d'affichage faisant partie de l'interface de communication (8), une trajectoire de consigne préconisée, éventuellement ajustée ou rafraîchie en cours de manoeuvre en fonction de l'évolution de la position du tracteur (8), d'une machine agricole (3, 3', 3") et/ou de l'attelage (1), et à autoriser l'opérateur à effectuer la manoeuvre dans la limite de conditions circonstancielles et de sécurité, ainsi que des possibilités physiques, cinématiques et mécaniques de l'attelage (1), l'unité (5) de calcul et de commande de la machine agricole (3) considérée fournissant une aide à la décision sous forme de trajectoire préconisée et éventuellement d'indications plus ou moins détaillées pour la réalisation d'actions pour le pilotage de la manoeuvre et/ou la correction de trajectoire.

**11.** Procédé selon la revendication 9, **caractérisé en ce qu'**il consiste, en mode de gestion automatique d'une manoeuvre par l'unité maître (5), à prendre en compte des données fournies par au moins une antenne (11, 11') de géolocalisation équipant le tracteur (2) ou l'une au moins des machines attelées (3, 3', 3").

**12.** Procédé selon la revendication 9 à 11, **caractérisé en ce qu'**il consiste, préalablement au traitement d'un chantier, préférentiellement immédiatement après constitution d'un attelage (1) en vue d'un travail simple ou complexe, à paramétrer l'algorithme de calcul des trajectoires en indiquant à l'unité maître (5) différentes caractéristiques fonctionnelles, structurelles et dimensionnelles du tracteur (2) et de la ou des autres machine(s) agricole(s) (3', 3") de l'attelage (1) considéré.

**13.** Procédé selon l'une quelconque des revendications 9 à 12, **caractérisé en ce qu'**il consiste à prendre en compte, au niveau de la ou de chaque liaison articulée (4, 4', 4"), au moins un degré de liberté sous forme de faculté de pivotement autour d'un axe de rotation vertical et/ou perpendiculaire au sol, le, certains ou chaque capteur(s) (6, 6', 6") associé(s) à la ou aux liaison(s) articulée(s) (4, 4', 4") fournissant un signal indicatif de la configuration de la ou des liaison(s) articulée(s) (4, 4', 4") correspondante(s) autour de l'axe de rotation respectivement concerné.

**14.** Procédé selon les revendications 12 et 13, **caractérisé en ce que** les caractéristiques et grandeurs suivantes sont renseignées lors de la phase de paramétrage de l'algorithme de calcul des trajectoires :

- l'angle de braquage maximal du tracteur (2),
- les largeurs maximales des composantes (2, 3, 3', 3") de l'attelage (1),
- la vitesse d'avancement souhaitée lors de la manoeuvre,
- la vitesse angulaire maximale de braquage des roues directrices du tracteur (2),
- les angles de pliage ou de pivotement maximum entre les composantes de l'attelage (2, 3, 3', 3"),
- la distance entre le pont arrière d'une composante de l'attelage (1) et le point d'attelage de la composante suivante qui lui est reliée,
- la distance entre le pont arrière d'une composante attelée et son point d'attelage à la composante précédente,
- les empattements des composantes de l'ensemble cinématique formé par l'attelage (1),
- le sens de braquage (droite ou gauche).

**15.** Procédé selon l'une quelconque des revendications 11 à 14, **caractérisé en ce qu'**il consiste à paramétrer l'algorithme d'optimisation de trajectoire en renseignant des objectifs d'optimisation souhaités, tels que, par exemple, la minimalisation du temps de travail, la minimalisation de la distance parcourue par l'une des composantes (2, 3, 3', 3") de l'attelage (1) durant la manoeuvre et/ou la minimalisation d'au moins une dimension géométrique caractérisant l'espace de manoeuvre, telle que par exemple la largeur de la fourrière dans le cas d'un demi-tour.

**16.** Procédé selon l'une quelconque des revendications 11 à 15, **caractérisé en ce qu'**il consiste à paramétrer l'algorithme d'optimisation de trajectoire, dans le cas de la gestion des demi-tours, par l'indication de contraintes d'exécution telles que, par exemple, l'imposition d'un point d'entrée et/ou d'un point de sortie dans la zone de travail du sol ou de la culture, ou encore l'imposition d'une largeur maximale autorisée de fourrière correspondant à un multiple déterminé, par exemple 2 ou 3, de la largeur de travail de la machine agricole (3, 3', 3") la plus large de l'attelage (1).

**17.** Procédé selon l'une quelconque des revendications 10 à 16, **caractérisé en ce qu'**il consiste à prendre en compte, lors de l'exécution sous contrôle de la manoeuvre selon une trajectoire de consigne calculée et optimisée, les données fournies par différents capteurs (6, 6', 10) montés sur le tracteur (2) et/ou la ou les machines agricoles (3, 3', 3") et/ou associés à la ou aux différentes liaison(s) articulée(s) (4, 4', 4") entre les composantes (2, 3, 3', 3") de l'attelage (1).

**18.** Procédé selon l'une quelconque des revendications 11 à 17, **caractérisé en ce qu'**il consiste à prendre en compte, lors de l'exécution sous contrôle de la manoeuvre en accord avec une trajectoire de consigne calculée et optimisée, les données fournies par un système de géolocalisation dont au moins une antenne (11, 11') correspondante est montée sur la machine agricole (3) comportant l'unité maître (5), sur une autre machine agricole (3', 3") de l'attelage (1) ou sur le tracteur (2), et éventuellement à relever les écarts avec la trajectoire de consigne préconisée et à les afficher, voire le cas échéant à calculer et à indiquer à l'opérateur les mesures compensatoires et/ou à les corriger automatiquement.

**19.** Procédé selon l'une quelconque des revendications 11 à 18, **caractérisé en ce qu'**il consiste à réaliser la manoeuvre considérée sous le contrôle de l'unité maître (5) par transmission d'instructions de cette dernière vers une interface de commande de puissance (12) du tracteur (2), pilotant notamment les systèmes de braquage, d'accélération et de freinage dudit tracteur (2).

**Patentansprüche**

1. Anhängevorrichtung, umfassend als operative konstitutive Komponenten, eine Zugmaschine (2) und mindestens eine gezogene oder aufgesattelte landwirtschaftliche Maschine (3, 3', 3"), welche direkt an die Zugmaschine (2) oder an eine in der Anhängevorrichtung vorangehende Maschine (3, 3') mittels mindestens einer Gelenkverbindung (4, 4', 4") angehängt ist, wobei die Anhängevorrichtung (1) ebenfalls ein System zur Steuerung und Lenkung von Rangiermanövern, insbesondere von Kehrtwenden, umfasst, aufweisend mindestens eine Rechen- und Steuereinheit (5, 5'), die in die oder in eine der angehängte(n) Maschine(n) (3, 3', 3") integriert ist und die zum einen mit mindestens einem Sensor (6, 6', 6"), der sie über die aktuellen gegenseitigen Relativpositionen der zwei Komponenten (2, 3; 3, 3'; 3', 3") jedes Paares operativer Komponenten (2, 3, 3', 3") der Anhängevorrichtung, die untereinander mittels einer Gelenkverbindung (4, 4', 4") verbunden sind, informiert, zum anderen mit einer Verwaltungs- und Steuereinheit (7) der Zugmaschine (2) und/oder mit einer Kommunikationsschnittstelle (8), insbesondere Anzeige- und ggf. Steuerschnittstelle, mit dem Fahrer und schließlich mit mindestens einem Einstellungs- oder Programmiermittel (9) verbunden ist, wobei diese zusätzlichen funktionellen Komponenten, gebildet von dem mindestens einen Sensor (6, 6', 6"), der Einheit (7) und/oder der Schnittstelle (8) und dem Einstellungs- oder Programmiermittel (9) und mit denen die vorgenannte Rechen- und Steuereinheit (5, 5') verbunden ist, ebenfalls Teil des Systems zur Steuerung und Lenkung von Rangiermanövern sind, wobei die Anhängevorrichtung (1) **dadurch gekennzeichnet ist, dass** die Rechen- und Steuereinheit (5, 5') der (3) oder einer der angehängten landwirtschaftlichen Maschine(n) (3', 3") die Mastereinheit des Systems zur Steuerung und Lenkung von Rangiermanövern und vorzugsweise der Anhängevorrichtung (1) darstellt, und wobei die Rechen- und Steuereinheit (5, 5') Mittel aufweist, die im Zusammenwirken mit den vorgenannten zusätzlichen funktionellen Komponenten (6, 6', 6", 7, 8, 9) und unter Steuerung von einem zur Steuerung der Rangiermanöver ausgelegten Programm ausgelegt sind, um:

   zum einen eine Sollbahn für mindestens ein kommendes Rangiermanöver zu berechnen, das automatisch oder von dem Fahrer ausgelöst wird, und dies auf der Basis von vorprogrammierten Parametern, die sich auf Merkmale und physikalische Größen der Zugmaschine (2) und der angehängten Maschine(n) (3, 3', 3"), auf Ziele und/oder Bedingungen in Verbindung mit der durchzuführenden landwirtschaftlichen Arbeit und auf das zu bearbeitende Gelände und auf Betriebsauswahlen der Anhängevorrichtung (1) beziehen und durch Umsetzung eines Bahnvorhersagealgorithmus und eines Bahnsollwertoptimierungsalgorithmus beziehen, und zum anderen das Rangiermanöver automatisch auszuführen oder eine halbautomatische Ausführung des Rangiermanövers zu unterstützen, und dies eventuell wiederholt, durch Ansteuern der Zugmaschine (2), unmittelbar oder mit Hilfe der Verwaltungs- und Steuereinheit (7) derselben, und durch Erheben, während eines Rangiermanövers, der Abweichungen zwischen der vorher festgelegten Sollbahn und der tatsächlichen oder laufend ermittelten Bahn, um sie automatisch zu korrigieren oder um sie dem Fahrer im halbautomatischen Modus zu signalisieren, eventuell nach Berechnung, mit Hilfe eines geeigneten Algorithmus, der durchzuführender Bahnkorrektur-Rangiermanöver.

2. Anhängevorrichtung nach Anspruch 1, **dadurch gekennzeichnet, dass** sie ebenfalls mindestens einen zusätzlichen Sensor (10) auf Höhe der Zugmaschine (2) umfasst, der dazu geeignet und bestimmt ist, Informationen über den Einschlagwinkel der Leiträder (2'), die Drehzahl der Antriebsräder (2"), die absolute Vortriebsgeschwindigkeit, die Höhenposition ihrer Dreipunkt-Anhängevorrichtung und/oder die Antriebsgeschwindigkeit ihrer Zapfwelle bereitzustellen.

3. Anhängevorrichtung nach einem der Ansprüche 1 und 2, **dadurch gekennzeichnet, dass** sie mindestens zwei landwirtschaftliche Maschinen (3, 3') umfasst, die in Reihe die eine hinter der anderen an der Zugmaschine (2) angehängt sind, wobei die erste Maschine (3) der Reihe direkt mit der Zugmaschine (2) verbunden ist, indem sie gezogen, getragen wird oder aufgesattelt ist, wobei die zweite Maschine (3') sowie die eventuellen folgenden Maschinen (3") gelenkig mit der ihnen jeweils vorangehenden Maschine (3, 3') verbunden sind und dass mindestens ein Sensor (6, 6', 6"), der ein Signal bereitstellt, das die gegenseitige Relativposition von zwei Betriebskomponenten (2, 3, 3', 3") angibt, die untereinander durch eine Gelenkverbindung (4, 4', 4") verbunden sind, der oder jeder Gelenkverbindung (4, 4', 4") zugeordnet oder auf deren Höhe angebracht ist.

4. Anhängevorrichtung nach einem der Ansprüche 1 bis 3, **dadurch gekennzeichnet, dass** die oder jede Gelenkverbindung (4, 4', 4") mindestens einen Freiheitsgrad in Form von Schwenkfähigkeit um eine zum Boden vertikale und/oder senkrechte Rotationsachse aufweist und dass der, einige oder jeder Sensor (6, 6', 6"), der/die der oder den Gelenkverbindung(en) (4, 4', 4") zugeordnet ist/sind, ein Signal bereitstellt/bereitstellen, das über die Konfiguration der entsprechenden Gelenkverbindung(en) (4, 4', 4") um die betroffene Rotationsachse informiert.

5. Anhängevorrichtung nach einem der Ansprüche 1 bis 4, **dadurch gekennzeichnet, dass** die Zugmaschine (2) und/oder die oder mindestens eine der gezogene(n) landwirtschaftliche(n) Maschine(n) (3, 3', 3") mit einer Geolokalisierungsantenne (11, 11') ausgerüstet ist/sind, deren Daten an die Master-Rechen- und Steuereinheit (5) übertragen und von dieser im automatischen Betriebsmodus verarbeitet und/oder auf der Kommunikationsschnittstelle (8) angezeigt werden.

6. Anhängevorrichtung nach Anspruch 3 oder einem der Ansprüche 4 und 5, sofern sie von Anspruch 3 abhängen, **dadurch gekennzeichnet, dass** die Master-Rechen- und Steuereinheit (5) sowie gegebenenfalls die Geolokalisierungsantenne (11) auf der ersten landwirtschaftlichen Maschine (3) angebracht ist/sind, die direkt mit der Zugmaschine (2) verbunden ist, wenn sie gezogen wird oder aufgesattelt ist.

7. Anhängevorrichtung nach einem der Ansprüche 1 bis 6, **dadurch gekennzeichnet, dass** die Master-Rechen- und Steuereinheit (5) mit einer Leistungssteuerschnittstelle (12) der Zugmaschine (2) oder mit der Verwaltungs- und Steuereinheit (7) derselben durch einen Kommunikationsbus (13) verbunden ist, wobei dieser Bus (13) ebenfalls die Übertragung von Daten zwischen dieser Master-Einheit (5) und den anderen funktionellen Komponenten (8, 10, 11') des Systems zur Steuerung und Lenkung sichert, mit denen die die Zugmaschine (2) eventuell ausgerüstet ist.

8. Anhängevorrichtung nach einem der Ansprüche 1 bis 7, **dadurch gekennzeichnet, dass** die Kommunikationsschnittstelle (8) mit dem Fahrer ein Auswahlmittel des Betriebsmodus zwischen einem Betrieb mit vollautomatischer Steuerung, mit halbautomatischer Steuerung oder mit manueller Steuerung aufweist.

9. Verfahren für die automatisierte oder halbautomatisierte Steuerung von Rangiermanövern, insbesondere von Kehrtwenden, einer gelenkigen oder mehrgelenkigen Anhängevorrichtung (1), umfassend eine Zugmaschine (2) und mindestens eine gezogene oder aufgesattelte landwirtschaftliche Maschine (3, 3', 3"), welche direkt an die Zugmaschine (2) oder an eine in der Anhängevorrichtung vorangehende Maschine (3, 3') mittels mindestens einer Gelenkverbindung (4, 4', 4") angehängt ist, sowie einem System zur Steuerung und Lenkung von Rangiermanövern, insbesondere von Kehrtwenden, aufweisend eine Rechen- und Steuereinheit (5, 5'), die in die oder in eine der angehängte(n) Maschine(n) (3, 3', 3") integriert ist und die zum einen mit mindestens einem Sensor (6, 6', 6"), der sie über die aktuellen gegenseitigen Relativpositionen der zwei Komponenten jedes Paares operativer Komponenten (2, 3, 3', 3") der Anhängevorrichtung (1), die untereinander mittels einer Gelenkverbindung (4, 4', 4") verbunden sind, informiert, zum anderen mit einer Verwaltungs- und Steuereinheit (7) der Zugmaschine (2) und/oder mit einer Kommunikationsschnittstelle (8), insbesondere Anzeige- und eventuell Steuerschnittstelle, mit dem Fahrer und schließlich mit mindestens einem Einstellungs- oder Programmiermittel (9) verbunden ist, wobei diese zusätzlichen funktionellen Komponenten (6, 6', 6", 7, 8, 9) ebenfalls Teil des Systems zur Steuerung und Lenkung von Rangiermanövern sind,
wobei das Verfahren **dadurch gekennzeichnet ist, dass** es darin besteht, mit Hilfe der Rechen- und Steuereinheit (5) der betroffenen landwirtschaftlichen Maschine (3), die als Master-Einheit des Systems zur Steuerung und Lenkung des Rangiermanövers der Anhängevorrichtung (1) agiert und durch Ausführen eines geeigneten Steuerungsprogramms der Rangiermanöver eine Sollbahn für mindestens ein kommendes Rangiermanöver zu berechnen, das automatisch oder von dem Fahrer ausgelöst wird, und dies auf der Basis von vorprogrammierten Einstellungen, die sich auf relevante konstruktive, funktionelle und Größenmerkmale der Zugmaschine (2) und der angehängten Maschine(n) (3, 3', 3"), auf Ziele und/oder Bedingungen in Verbindung mit der durchzuführenden landwirtschaftlichen Arbeit und auf das zu bearbeitende Land und auf Betriebsauswahlen der Anhängevorrichtung (1) beziehen und durch Umsetzen eines Bahnvorhersagealgorithmus und eines Bahnsollwertoptimierungsalgorithmus,
dann automatisch das Rangiermanöver auszuführen oder eine halbautomatische Ausführung des Rangiermanövers zu unterstützen, und dies eventuell wiederholt, durch Ansteuern der Zugmaschine (2), direkt oder mit Hilfe ihrer Verwaltungs- und Steuereinheit (7), und durch Erheben, während eines Rangiermanövers, der Abweichungen zwischen der vorher festgelegten Sollbahn und der tatsächlichen oder laufend ermittelten Bahn, um sie automatisch zu korrigieren oder um sie dem Fahrer im halbautomatischen Modus zu signalisieren, eventuell nach dem Berechnen, mit Hilfe eines geeigneten Algorithmus, der durchzuführenden Bahnkorrektur-Rangiermaßnahmen.

10. Verfahren nach Anspruch 9, **dadurch gekennzeichnet, dass** es darin besteht, im halbautomatischen Steuermodus eines Rangiermanövers dem in der Zugmaschine (2) installierten Bediener und vorzugsweise mit Hilfe einer Anzeigevorrichtung, die Teil der Kommunikationsschnittstelle (8) ist, eine empfohlene Sollbahn, eventuell korrigiert oder aufgefrischt während eines Rangiermanövers in Abhängigkeit von der Entwicklung der Position der Zugmaschine (8), einer landwirtschaftlichen Maschine (3, 3', 3") und/oder der Anhängevorrichtung (1) anzuzeigen und dem Bediener zu gestatten, das Rangiermanöver im Rahmen der Umstände und Sicherheitsbedingungen sowie der physikalischen, kinematischen und mechanischen Möglichkeiten der Anhängevorrichtung (1) durchzuführen, wobei die Rechen- und Steuereinheit (5) der betroffenen landwirtschaftliche Maschine (3) eine Entscheidungshilfe in Form einer empfohlenen Bahn und eventuell mehr oder weniger detaillierter Hinweise für die Durchführung von Aktionen für das Ansteuern des Rangiermanövers und/oder die Korrektur der Bahn bereitstellt.

11. Verfahren nach Anspruch 9, **dadurch gekennzeichnet, dass** es darin besteht, im automatischen Steuermodus eines Rangiermanövers durch die Master-Einheit (5) Daten zu berücksichtigen, die von mindestens einer Geolokalisierungsantenne (11, 11') bereitgestellt werden, mit welcher die Zugmaschine (2) oder mindestens eine der angehängten Maschinen (3, 3', 3") ausgerüstet ist.

12. Verfahren nach Anspruch 9 bis 11, **dadurch gekennzeichnet, dass** es darin besteht, vor der Bearbeitung eines Einsatzortes, vorzugsweise unmittelbar nach Bildung einer Anhängevorrichtung (1) hinsichtlich einer einfachen oder komplexen Arbeit, einen Algorithmus zum Berechnen von Bahnen durch Angabe, für die Master-Einheit (5), diverser funktionaler, struktureller und Größenmerkmale der Zugmaschine (2) und der oder der anderen landwirtschaftlichen Maschine(n) (3', 3") der betroffenen Anhängevorrichtung (1) einzustellen.

13. Verfahren nach einem der Ansprüche 9 bis 12, **dadurch gekennzeichnet, dass** es darin besteht, im Bereich der oder jeder Gelenkverbindung (4, 4', 4") mindestens einen Freiheitsgrad in Form von Schwenkfähigkeit um eine zum Boden vertikale und/oder senkrechte Rotationsachse zu berücksichtigen, wobei der, einige oder jeder der Gelenkverbindung(en) zugeordnete(n) Sensor(en) (6, 6', 6") ein Signal bereitstellt/bereitstellen, das über die Konfiguration der entsprechenden Gelenkverbindung(en) (4, 4', 4") um die jeweils betroffene Rotationsachse informiert.

14. Verfahren nach den Ansprüchen 12 und 13, **dadurch gekennzeichnet, dass** die folgenden Merkmale und Größen während der Einstellungsphase des Bahnberechnungsalgorithmus eingegeben werden:

- der maximale Einschlagwinkel der Zugmaschine (2),
- die maximalen Breiten der Komponenten (2, 3, 3', 3") der Anhängevorrichtung (1),
- die gewünschte Vortriebsgeschwindigkeit während des Rangiermanövers,
- die maximale Einschlag-Winkelgeschwindigkeit der Leiträder der Zugmaschine (2),
- die maximalen Falt- oder Schwenkwinkel zwischen den Komponenten der Anhängevorrichtung (2, 3, 3', 3"),
- der Abstand zwischen der hinteren Brücke einer Komponente der Anhängevorrichtung (1) und dem Anhängepunkt der folgenden Komponente, die mit ihr verbunden ist,
- der Abstand zwischen der hinteren Brücke einer anderen angehängten Komponente und ihrem Anhängepunkt an die vorangehende Komponente,
- die Radstände der Komponenten der von der Anhängevorrichtung (1) gebildeten kinematischen Einheit,
- die Einschlagrichtung (rechts oder links).

15. Verfahren nach einem der Ansprüche 11 bis 14, **dadurch gekennzeichnet, dass** es darin besteht, den Bahnoptimierungsalgorithmus durch Eingabe der gewünschten Optimierungsziele wie beispielsweise die Minimierung der Arbeitszeit, die Minimierung der von einer der Komponenten (2, 3, 3', 3") der Anhängevorrichtung (1) während des Rangiermanövers zurückgelegten Strecke und/oder die Minimierung von mindestens einer geometrischen Abmessung, welche den Rangiermanöverraum kennzeichnet, wie beispielsweise die Breite des Vorgewendes bei einer Kehrtwende, einzustellen.

16. Verfahren nach einem der Ansprüche 11 bis 15, **dadurch gekennzeichnet, dass** es darin besteht, beim Steuern der Kehrtwenden den Bahnoptimierungsalgorithmus durch Angabe von Ausführungsbedingungen wie beispielsweise eines obligatorischen Eintrittspunkts und/oder Austrittspunkts im Boden- oder Kultivierungsbearbeitungsbereich oder auch einer maximal zulässigen obligatorischen Vorgewendebreite, die einem bestimmten Vielfachen, beispielsweise 2-fachen oder 3-fachen, der Arbeitsbreite der breitesten landwirtschaftlichen Maschine (3, 3', 3") der Anhängevorrichtung (1) entspricht, einzustellen.

17. Verfahren nach einem der Ansprüche 10 bis 16, **dadurch gekennzeichnet, dass** es darin besteht, bei der kontrollierten Ausführung des Rangiermanövers gemäß einer berechneten und optimierten Sollbahn die Daten zu berücksichtigen, die von verschiedenen Sensoren (6, 6', 10) bereitgestellt werden, die auf der Zugmaschine (2) und/oder der oder den landwirtschaftlichen Maschine(n) (3, 3', 3") angebracht und/oder der oder verschiedenen Gelenkverbindung(en) (4, 4', 4") zwischen den Komponenten (2, 3, 3', 3") der Anhängevorrichtung (1) zugeordnet sind.

18. Verfahren nach einem der Ansprüche 11 bis 17, **dadurch gekennzeichnet, dass** es darin besteht, bei der kontrollierten Ausführung des Rangiermanövers in Abstimmung mit einer berechneten und optimierten Sollbahn die Daten zu berücksichtigen, die von einem Geolokalisierungssystem bereitgestellt werden, von dem mindestens eine entsprechende Antenne (11, 11') auf der landwirtschaftlichen Maschine (3), welche die Master-Einheit (5) aufweist, auf einer anderen landwirtschaftlichen Maschine (3', 3") der Anhängevorrichtung (1) oder auf der Zugmaschine (2) angebracht ist und eventuell die Abweichungen von der empfohlenen Sollbahn zu ermitteln und sie anzuzeigen, beziehungsweise gegebenenfalls Ausgleichsmaßnahmen zu berechnen und dem Bediener anzuzeigen und/oder sie automatisch zu korrigieren.

19. Verfahren nach einem der Ansprüche 11 bis 18, **dadurch gekennzeichnet, dass** es darin besteht, das entsprechende Rangiermanöver gesteuert von der Master-Einheit (5) durch Übertragen von Befehlen von dieser an eine Leistungssteuerschnittstelle (12) der Zugmaschine (2) durchzuführen, die insbesondere die Einschlags-, Beschleunigungs- und Bremssysteme der Zugmaschine (2) steuert.

**Claims**

1. Coupling including, as operational constituent components, a tractor (2) and at least one towed or semi-mounted agricultural machine (3, 3', 3"), directly coupled to said tractor (2) or to a preceding machine (3, 3') in the coupling by at least one articulated linkage (4, 4', 4"), said coupling (1) also including a system for the management and guiding of manoeuvres, particularly U-turns, comprising at least one calculating and control unit (5, 5') which is integrated in the or in one of the coupled machines (3, 3', 3") and which is connected, firstly, to at least one sensor (6, 6', 6") informing it about the current mutual relative positions of the two components (2, 3; 3, 3'; 3', 3") of each pair of operational components (2, 3, 3', 3") of the coupling connected to each other by an articulated linkage (4, 4', 4"), secondly, to a unit (7) for the management and control of the tractor (2) and/or to an interface (8) for communication, particularly for display and possibly control, with the driver and, lastly, to at least one configuration or programming means (9), these additional functional components, composed of said at least one sensor (6, 6', 6"), said unit (7) and/or interface (8) and said configuration or programming means (9) and to which the aforementioned calculating and control unit (5, 5') is connected, also forming part of the system for the management and guiding of manoeuvres,
the coupling (1) **characterised**
**in that** the unit (5, 5') for calculation and control of the (3) or of one of the coupled agricultural machines (3', 3") constitutes the master unit of the system for the management and guiding of manoeuvres and preferably of the coupling (1), and
**in that** the calculating and control unit (5, 5') comprises means which, in cooperation with the aforementioned additional functional components (6, 6', 6", 7, 8, 9), under the control of an adapted manoeuvre management program, are adapted for:

on the one hand, calculating a set path for at least one future manoeuvre, initiated automatically or by the driver, this being on the basis of preprogrammed parameters relating to the characteristics and physical quantities of the tractor (2) and of the coupled machine or machines (3, 3', 3"), to objectives and/or constraints connected with the agricultural work to be carried out, and to the terrain to be treated and to choices of operation of the coupling (1) and using an algorithm for predicting paths and an algorithm for optimising path instructions and, on the other hand, automatically executing said manoeuvre or assisting semi-automatic execution of said manoeuvre, this being possibly in a repeated manner, by steering the tractor (2), directly or by means of the unit (7) for the management and control of the latter, and by picking up, during a manoeuvre, the differences between the predefined set path and the actual or currently estimated path, in order to correct them automatically or to indicate them to the driver in the semi-automatic mode, possibly after calculating the path correction manoeuvres to be made using an adapted algorithm.

2. Coupling according to claim 1, **characterised in that** it also includes at least one additional sensor (10) at the level of the tractor (2) able and designed to provide information on the turning angle of the steerable wheels (2'), the speed of rotation of the driving wheels (2"), the absolute speed of advance, the height position of its coupling at three points and/or the speed of driving of its power take-off.

3. Coupling according to any one of claims 1 and 2, **characterised in that** it includes at least two agricultural machines (3, 3') coupled in series one behind the other to the tractor (2), the first machine (3) of the series being connected directly to the tractor (2) while being towed, mounted or semi-mounted, the second machine (3') as well as any subsequent machines (3") being connected by an articulated linkage to the machine (3, 3') which precedes them respectively, and **in that** at least one sensor (6, 6', 6") providing a signal indicating the mutual relative position of two operational components (2, 3, 3', 3") connected to each other by an articulated linkage (4, 4', 4") is associated with or mounted at the level of the or each articulated linkage (4, 4', 4").

4. Coupling according to any one of claims 1 to 3, **characterised in that** the or each articulated linkage (4, 4', 4") has at least one degree of freedom in the form of the capacity to pivot about an axis of rotation which is vertical and/or perpendicular to the ground, and **in that** the, some or each sensor(s) (6, 6', 6") associated with the articulated linkage or linkages (4, 4', 4") provide(s) a signal indicating the configuration of the corresponding articulated linkage or linkages (4, 4', 4") about the axis of rotation concerned.

5. Coupling according to any one of claims 1 to 4, **characterised in that** the tractor (2) and/or the or at least one of the towed agricultural machines (3, 3', 3") is or are equipped with a geolocation antenna (11, 11') of which the data are transmitted to the master unit for calculation and control (5) and processed by the latter, in the automatic mode of operation, and/or displayed on the communications interface (8).

6. Coupling according to claim 3 or any one of claims 4 and 5, insofar as they depend on claim 3, **characterised in that** the master unit (5) for calculation and control as well as, if occasion arises, the geolocation antenna (11) is or are mounted on the first agricultural machine (3) directly connected to the tractor (2), when it is towed or semi-mounted.

7. Coupling according to any one of claims 1 to 6, **characterised in that** the master unit for calculation and control (5) is connected to an interface (12) for controlling the power of the tractor (2), or to the unit for the management and control (7) of the latter, by a communications bus (13), this bus (13) also ensuring the transmission of data between this master unit (5) and the other functional components (8, 10, 11') of the management and guiding system, with which the tractor (2) may be equipped.

8. Coupling according to any one of claims 1 to 7, **characterised in that** the interface (8) for communication with the driver comprises a means of selection of the mode of operation between operation with fully automatic control, with semi-automatic control or with manual control.

9. Method for the automated or semi-automated management of manoeuvres, particularly U-turns, of an articulated or polyarticulated coupling (1) including a tractor (2) and at least one towed or semi-mounted agricultural machine (3, 3', 3") directly coupled to said tractor (2), or to a preceding machine in the coupling by at least one articulated linkage (4, 4', 4"), as well as a system for the management and guiding of manoeuvres, particularly U-turns, comprising a calculating and control unit (5, 5'), which is integrated in the or in one of the coupled machines (3, 3', 3"), and which is connected, firstly, to at least one sensor (6, 6', 6") informing it about the current mutual relative positions of the two components of each pair of operational components (2, 3, 3', 3") of the coupling (1) connected to each other by an articulated linkage (4, 4', 4"), secondly, to a unit (7) for the management and control of the tractor (2) and/or to an interface (8) for communication, particularly for display and possibly control, with the driver and, lastly, to at least one configuration or programming means (9), these additional functional components (6, 6', 6", 7, 8, 9) also forming part of the system for the management and guiding of manoeuvres,
   the method **characterised in that** it consists in, by using the unit (5) for calculation and control of the agricultural machine (3) in question, acting as master unit of the system for the management and guiding of manoeuvres of the coupling (1), and by execution of an adapted program for the management of manoeuvres, of calculating a set path for at least one future manoeuvre, initiated automatically or by the driver, this being on the basis of preprogrammed parameters relating to the relevant structural, functional and dimensional characteristics of the tractor (2) and of the coupled machine or machines (3, 3', 3"), to objectives and/or constraints connected with the agricultural work to be carried out, and to the terrain to be treated and to choices of operation of the coupling (1) and using an algorithm for predicting paths and an algorithm for optimising path instructions,
   then automatically executing said manoeuvre or assisting semi-automatic execution of said manoeuvre, this being possibly in a repeated manner, by steering the tractor (2), directly or by means of its management and control unit (7), and by picking up, during a manoeuvre, the differences between the predefined set path and the actual or currently estimated path, in order to correct them automatically or to indicate them to the driver in the semi-automatic mode, possibly after calculating the correction measures to be taken by using an adapted algorithm.

10. Method according to claim 9, **characterised in that** it consists, in the semi-automatic mode for management of a manoeuvre, of displaying, for the operator seated in the tractor (2) and preferably using a display device which forms part of the communications interface (8), a recommended set path which may be adjusted or refreshed during a manoeuvre as a function of the course of the position of the tractor (8), of an agricultural machine (3, 3', 3") and/or of the coupling (1), and authorising the operator to perform the manoeuvre within the limits of circumstantial and safety conditions, as well as physical, kinematic and mechanical capacities of the coupling (1), the unit (5) for calculating and controlling the agricultural machine (3) in question providing an aid to the decision in the form of a recommended path and possibly more or less detailed indications for the performance of actions for directing the manoeuvre and/or correcting the path.

11. Method according to claim 9, **characterised in that** it consists, in the automatic mode of management of a manoeuvre by the master unit (5), of taking into account the data provided by at least one geolocation antenna (11, 11') with which the tractor (2) or at least one of the coupled machines (3, 3', 3") is equipped.

12. Method according to claims 9 to 11, **characterised in that** it consists, prior to the treatment of a site, preferably immediately after making up a coupling (1) for the purpose of simple or complex work, of configuring the path calculating algorithm by indicating to the master unit (5) different functional, structural and dimensional characteristics of the tractor (2) and of the or the other agricultural machines (3', 3") of the coupling (1) in question.

13. Method according to any one of claims 9 to 12, **characterised in that** it consists of taking into account, at the level of the or each articulated linkage (4, 4', 4"), at least one degree of freedom in the form of the capacity to pivot about an axis of rotation which is vertical and/or perpendicular to the ground, the, some or each sensor (6, 6', 6") associated with the articulated linkage or linkages (4, 4', 4") providing a signal indicating the configuration of the corresponding articulated linkage or linkages (4, 4', 4") about the axis of rotation respectively concerned.

14. Method according to claims 12 and 13, **characterised in that** the following characteristics and quantities are indicated during the stage of configuring the path calculating algorithm:

- the maximum turning angle of the tractor (2),
- the maximum widths of the components (2, 3, 3', 3") of the coupling (1),
- the desired speed of advance during the manoeuvre,
- the maximum angular speed of turning of the steered wheels of the tractor (2),
- the maximum angles of bending or pivoting between the components of the coupling (2, 3, 3', 3"),
- the distance between the rear axle of one component of the coupling (1) and the coupling point of the following component which is connected to it,
- the distance between the rear axle of one coupled component and its point of coupling to the preceding component,
- the wheelbase of the components of the kinematic assembly consisting of the coupling (1),
- the direction of turning (right or left).

15. Method according to any one of claims 11 to 14, **characterised in that** it consists of configuring the path optimisation algorithm by indicating desired objectives of optimisation, for example, minimising the working time, minimising the distance covered by one of the components (2, 3, 3', 3") of the coupling (1) during the manoeuvre and/or minimising at least one geometrical dimension which characterises the manoeuvring space, for example the width of the headland in the case of a U-turn.

16. Method according to any one of claims 11 to 15, **characterised in that** it consists of configuring the path optimisation algorithm, in the case of the management of U-turns, by indicating constraints of execution, for example the imposition of a point of entry and/or a point of exit in the ground or crop working area, or the imposition of a maximum permitted width of headland corresponding to a given multiple, for example 2 or 3, of the working width of the widest agricultural machine (3, 3', 3") of the coupling (1).

17. Method according to any one of claims 10 to 16, **characterised in that** it consists of taking into account, during execution under control of the manoeuvre along a calculated and optimised set path, the data provided by different sensors (6, 6', 10) mounted on the tractor (2) and/or the agricultural machine or machines (3, 3', 3") and/or associated with the articulated linkage or with the different articulated linkages (4, 4', 4") between the components (2, 3, 3', 3") of the coupling (1).

**18.** Method according to any one of claims 11 to 17, **characterised in that** it consists of taking into account, during execution under control of the manoeuvre in accordance with a calculated and optimised set path, the data provided by a geolocation system of which at least one corresponding antenna (11, 11') is mounted on the agricultural machine (3) comprising the master unit (5), on another agricultural machine (3', 3") of the coupling (1) or on the tractor (2), and possibly picking up the differences from the recommended set path and displaying them or even, if occasion arises, calculating and indicating to the operator the compensatory measures and/or correcting them automatically.

**19.** Method according to any one of claims 11 to 18, **characterised in that** it consists of performing the manoeuvre in question under the control of the master unit (5) by transmission of instructions from the latter to an interface (12) for controlling the power of the tractor (2), in particular directing the systems for turning, acceleration and braking of said tractor (2).

FIG. 1A

FIG. 1B

FIG. 2

Système de braquage

Système d'accélération

Système de freinage

Autre élément optionnel

Système d'échange de données (par exemple liaison isobus)

Autre élément optionnel

Système d'affichage

FIG. 3

Paramètres géométriques des matériels + Paramètres de fonctionnement des matériels
Choix de l'algorithme de calcul des trajectoires + Choix de l'algorithme d'optimisation des trajectoires
Choix du mode de pilotage (semi-automatique ou automatique)
• Mode semi-automatique : Choix du mode d'affichage pour le pilotage manuel
• Mode automatique : Choix de la variable d'écart à minimiser et de l'algorithme de commande

**Interface de programmation**

**Algorithme de calcul de trajectoire des éléments attelés**

*Optimisation satisfaisante*

**Algorithme d'optimisation des trajectoires**

**Dispositif d'affichage de trajectoire destiné à l'opérateur pour la conduite manuelle**

*Optimisation satisfaisante*

**Algorithme de calcul des corrections de trajectoire**

**Informations données par les capteurs**

FIG. 4

```
  ┌─────────────┐
  │   ┌─────┐   │
  │   │  0  │   │
  │   └─────┘   │
  │      │ ── Mise en marche et conditions initiales correctes
  │   ┌──┴──┐   ┌──────────────────────────────────────────────┐
  │   │  1  │───┤              Phase de paramétrage             │
  │   └──┬──┘   └──────────────────────────────────────────────┘
  │      │ ── Paramétrage effectué
  │   ┌──┴──┐   ┌──────────────────────────────────────────────┐
  │   │  2  │───┤       Etablissement des trajectoires consignes │
  │   └──┬──┘   └──────────────────────────────────────────────┘
  │      │ ── Trajectoires consignes sauvegardées
  │   ┌──┴──┐   ┌──────────────────────────────────────────────┐
  │   │  3  │───┤           Attente de début de manœuvre         │
  │   └──┬──┘   └──────────────────────────────────────────────┘
  │      │ ── Début de manœuvre
  │   ┌──┴──┐   ┌──────────────────────────────────────────────┐
  │   │  4  │───┤                Phase de guidage                │
  │   └──┬──┘   └──────────────────────────────────────────────┘
  │      │
  │      │         Désactivation de la phase de guidage
  │      │         et attente manœuvre suivante
  │      │
  │      │ ── Désactivation de la phase de guidage et arrêt du travail
  │   ┌──┴──┐   ┌──────────────────────────────────────────────┐
  │   │  5  │───┤          Arrêt du dispositif de guidage        │
  │   └──┬──┘   └──────────────────────────────────────────────┘
  │      │ ── Dispositif de guidage arrêté
  └──────┘
```

FIG. 5

**FIG. 6**

FIG. 7

FIG. 8A

FIG. 8B

FIG. 8C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8131432 B2
- US 8346443 B2
- US 8577558 B2
- EP 2659759 A1

- US 20130289883 A1
- US 20120185139 A1
- US 20050015189 A1

**Littérature non-brevet citée dans la description**

- Utilisation et développement de la méthode du Simplexe - Nouvelles procédures d'optimisation de la démarche expérimentale. **FIAT, O.** Thèse de Doctorat. Université de Limoges, 2002, 188
- Méthodes directes d'optimisation - Méthodes à une variable et Simplexe. *Techniques de l'Ingénieur,* 2002
- Méthodes directes d'optimisation - Méthodes dérivées de la méthode Simplexe - Méthode de Nelder et Mead (Modified Simplex). *Techniques de l'Ingénieur*
- **JACOB D.** Applications de la commande PID - Asservissement température et position. *Techniques de l'Ingénieur,* 2004
- **YUNG, N.H.C. ; CANG Y.** An intelligent mobile vehicle navigator based on fuzzy logic and reinforcement learning'' (un navigateur de véhicule mobile intelligent basé sur la logique floue et l'apprentissage de renforcement). *Systems, Man, and Cybernetics, Part B: Cybernetics, IEEE Transactions on,* 1999, vol. 29 (2), 314-321

- **CHO S. I. ; KI N. H.** Autonomous speed sprayer guidance using machine vision and fuzzy logic'' (guidage d'un pulvérisateur rapide autonome utilisant la vision machine et la logique floue). *Transactions of the ASAE,* 1999, vol. 42 (4), 1137-1143
- **BÜHLER H.** Réglage par logique floue. Polytechniques et Universitaires Romandes, 1994, 181
- **CERR M.** Instrumentation industrielle, Tome 2, Col. Tec et Doc. 747, 1991
- **M'SAAD M. ; CHEBASSIER J.** Commande adaptative des systèmes. *Techniques de l'Ingénieur,* 2000
- **FARGEON C. ; QUIN J-P.** Robotique mobile. 1993, 358
- **KAUFMAN A.** Introduction à la logique floue. *Techniques de l'Ingénieur,* 1992